# EUROPEAN PATENT APPLICATION

(11) **EP 4 322 424 A1**
(43) Date of publication of application: **14.02.2024**
(21) Application number: 23189894.1
(22) Date of filing: 04.08.2023
(51) Int. Cl.: H04B 7/155, H04B 10/2575, H04B 10/25

(54) **REPEATER WITH FIELD-CONFIGURED FIBER/RADIO FREQUENCY (RF) MODE**

(30) Priority: 05.08.2022 US 202263395697 P
(71) Applicant: Wilson Electronics, LLC, St. George, UT 84790 (US)
(72) Inventor: FARISS, Stephen Todd, Frisco, TX 75035 (US); MOUSER, Michael James, Wylie, TX 75098 (US); PATEL, Ilesh V., Euless, TX 76039 (US); ANDERSON, Dale Robert, Colleyville, 76034 (US); ASHWORTH, Christopher Ken, Toquerville, UT 84774 (US)
(74) Representative: ip21 Ltd

(57) **Abstract**

A technology is described for a repeater. The repeater can comprise a first antenna port, a second antenna port, one or more first direction amplification and filtering paths, one or more second direction amplification and filtering paths, and a controller. The first antenna port can be configured to be coupled to a first antenna. The second antenna port can be configured to be coupled to a second antenna. The one or more first direction amplification and filtering paths can be coupled between the first antenna port and the second antenna port. The one or more second direction amplification and filtering paths can be coupled between the first antenna port and the second antenna port. The controller can be configured to switch the repeater between a radio frequency (RF) mode or a fiber optic mode.

## Description

### BACKGROUND

Repeaters can be used to increase the quality of wireless communication between a wireless device and a wireless communication access point, such as a cell tower. Repeaters can increase the quality of the wireless communication by amplifying, filtering, and/or applying other processing techniques to uplink and downlink signals communicated between the wireless device and the wireless communication access point.

As an example, the repeater can receive, via an antenna, downlink signals from the wireless communication access point. The repeater can amplify the downlink signal and then provide an amplified downlink signal to the wireless device. In other words, the repeater can act as a relay between the wireless device and the wireless communication access point. As a result, the wireless device can receive a stronger signal from the wireless communication access point. Similarly, uplink signals from the wireless device (e.g., telephone calls and other data) can be received at the repeater. The repeater can amplify the uplink signals before communicating, via an antenna, the uplink signals to the wireless communication access point.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates a repeater system in accordance with an example;
FIG. 2 illustrates a repeater in communication with a wireless device and a base station in accordance with an example;
FIG. 3 illustrates a repeater having a first direction amplification and filtering path and a second direction amplification and filtering path in accordance with an example;
FIG. 4 illustrates a multiband repeater in accordance with an example;
FIG. 5 illustrates a repeater in communication with a remote antenna unit in accordance with an example;
FIGS. 6A and 6B illustrate a repeater in communication with a remote antenna unit in accordance with an example;
FIGS. 7A, 7B, and 7C illustrate a repeater in communication with a repeater conversion unit and a remote antenna unit in accordance with an example;
FIGS. 8A, 8B, and 8C illustrate a repeater in communication with one or more amplification and filtering paths and one or more bypass paths in accordance with an example;
FIGS. 9A and 9B illustrate a repeater in communication with a remote antenna unit in accordance with an example;
FIG. 10 illustrates a timing diagram between a repeater, an RF/Fiber converter, and an antenna unit in accordance with an example;
FIG. 11 depicts a flowchart of a machine readable storage medium having instructions embodied thereon for repeater functionality in accordance with an example;
FIG. 12 illustrates a diagram of a wireless device in accordance with an example.

Reference will now be made to the exemplary embodiments illustrated, and specific language will be used herein to describe the same. It will nevertheless be understood that no limitation of the scope of the invention is thereby intended.

### DETAILED DESCRIPTION

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating steps and operations and do not necessarily indicate a particular order or sequence.

### Definitions

In describing and claiming the present invention, the following terminology will be used.

As used herein, an "RF mode" is a mode in which first direction RF signals and second direction RF signals are configured to be sent from the repeater to the wireless access point and received at the repeater from the wireless access point as RF signals without conversion to or from a fiber optic signal.

As used herein, a "fiber optic mode" is a mode in which first direction RF signals and second direction RF signals are configured to be sent from the repeater to the wireless access point and received at the repeater from the wireless access point using conversion to or from a fiber optic signal.

As used herein, a "an RF mode RF signal" is an RF signal that is configured to be sent from the repeater to the wireless access point and received at the repeater from the wireless access point without conversion to or from a fiber optic signal.

As used herein, a "a fiber optic mode RF signal" is an RF signal that is configured to be sent from the repeater to the wireless access point and received at the repeater from the wireless access point using conversion to or from a fiber optic signal.

As used herein, a "fiber optic RF path" is an RF path that is a bypass path, an attenuated path, or a combination thereof.

As used herein, a "bypass path" is an RF signal path that has fewer amplification and/or filtering components than an associated RF amplification and filtering path. In one example, directing an RF signal to a bypass path can facilitate a reduced power level and/or reduced gain for the RF signal compared to the power level and/or gain for an RF signal directed to an associated RF amplification and filtering path.

As used herein, an "attenuated path" is an RF path that facilitates a reduced power level and/or reduced gain for the RF signal compared to the power level and/or gain for an RF signal directed to an associated RF amplification and filtering path.

The singular forms "a," "an," and "the" include plural referents unless the context clearly dictates otherwise. Thus, for example, reference to "a transceiver" includes reference to one or more of such structures and reference to "switching" refers to one or more of such operations.

As used herein with respect to an identified property or circumstance, "substantially" refers to a degree of deviation that is sufficiently small so as to not measurably detract from the identified property or circumstance. The exact degree of deviation allowable may in some cases depend on the specific context. The use of "substantially" is equally applicable when used in a negative connotation to refer to the complete or near complete lack of an action, characteristic, property, state, structure, item, or result.

As used herein, "adjacent" refers to the proximity of two structures or elements. Particularly, elements that are identified as being "adjacent" may be either abutting or connected. Such elements may also be near or close to each other without necessarily contacting each other. The exact degree of proximity may in some cases depend on the specific context.

As used herein, the term "about" is used to provide flexibility and imprecision associated with a given term, metric or value. The degree of flexibility for a particular variable can be readily determined by one skilled in the art. However, unless otherwise enunciated, the term "about" generally connotes flexibility of less than 2%, and most often less than 1%, and in some cases less than 0.01%.

As used herein, comparative terms such as "increased," "decreased," "better," "worse," "higher," "lower," "enhanced," "improved," "maximized," "minimized," and the like refer to a property of a device, component, composition, or activity that is measurably different from other devices, components, compositions, or activities that are in a surrounding or adjacent area, that are similarly situated, that are in a single device or composition or in multiple comparable devices or compositions, that are in a group or class, that are in multiple groups or classes, or as compared to an original or baseline state, or the known state of the art. For example, an FPGA with "reduced" runtime can refer to an FPGA which has a lower runtime duration than one or more other FPGAs. A number of factors can cause such reduced runtime, including materials, configurations, architecture, connections, etc.

Reference in this specification may be made to devices, structures, systems, or methods that provide "improved" performance. It is to be understood that unless otherwise stated, such "improvement" is a measure of a benefit obtained based on a comparison to devices, structures, systems, or methods in the prior art. Furthermore, it is to be understood that the degree of improved performance may vary between disclosed embodiments and that no equality or consistency in the amount, degree, or realization of improved performance is to be assumed as universally applicable.

In this disclosure, "comprises," "comprising," "containing" and "having" and the like can have the meaning ascribed to them in U.S. Patent law and can mean "includes," "including," and the like, and are generally interpreted to be open ended terms. The terms "consisting of" or "consists of" are closed terms, and include only the components, structures, steps, or the like specifically listed in conjunction with such terms, as well as that which is in accordance with U.S. Patent law. "Consisting essentially of" or "consists essentially of" have the meaning generally ascribed to them by U.S. Patent law. In particular, such terms are generally closed terms, with the exception of allowing inclusion of additional items, materials, components, steps, or elements that do not materially affect the basic and novel characteristics or function of the item(s) used in connection therewith. For example, trace elements present in a composition, but not affecting the compositions nature or characteristics would be permissible if present under the "consisting essentially of" language, even though not expressly recited in a list of items following such terminology. When using an open-ended term, like "comprising" or "including," in the written description it is understood that direct support should be afforded also to "consisting essentially of" language as well as "consisting of" language as if stated explicitly and vice versa.

The terms "first," "second," "third," "fourth," and the like in the description and in the claims, if any, are used for distinguishing between similar elements and not necessarily for describing a particular sequential or chronological order. It is to be understood that any terms so used are interchangeable under appropriate circumstances such that the embodiments described herein are, for example, capable of operation in sequences other than those illustrated or otherwise described herein.

The term "coupled," as used herein, is defined as directly or indirectly connected in a biological, chemical, mechanical, electrical, or nonelectrical manner. "Directly coupled" structures or elements are in contact with one another. In this written description, recitation of "coupled" or "connected" provides express support for "directly coupled" or "directly connected" and vice versa. Objects described herein as being "adjacent to" each other may be in physical contact with each other, in close proximity to each other, or in the same general region or area as each other, as appropriate for the context in which the phrase is used.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a *de facto* equivalent of any other member of the same list solely based on their presentation in a common group without indications to the contrary.

As used herein, the term "at least one of" is intended to be synonymous with "one or more of." For example, "at least one of A, B and C" explicitly includes only A, only B, only C, or combinations of each.

Numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a numerical range of about 1 to about 4.5 should be interpreted to include not only the explicitly recited limits of 1 to about 4.5, but also to include individual numerals such as 2, 3, 4, and sub-ranges such as 1 to 3, 2 to 4, etc. The same principle applies to ranges reciting only one numerical value, such as "less than about 4.5," which should be interpreted to include all of the above-recited values and ranges. Further, such an interpretation should apply regardless of the breadth of the range or the characteristic being described.

Any steps recited in any method or process claims may be executed in any order and are not limited to the order presented in the claims. Means-plus-function or step-plus-function limitations will only be employed where for a specific claim limitation all of the following conditions are present in that limitation: a) "means for" or "step for" is expressly recited; and b) a corresponding function is expressly recited. The structure, material or acts that support the means-plus function are expressly recited in the description herein. Accordingly, the scope of the invention should be determined solely by the appended claims and their legal equivalents, rather than by the descriptions and examples given herein.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Repeaters can increase the quality of the wireless communication by amplifying, filtering, and/or applying other processing techniques to uplink and downlink signals communicated between the wireless device and the wireless communication access point.

In many cases, a repeater amplifies and filters an uplink or downlink signal before transmission to a wireless device or wireless communication access point, but a repeater may not be configured to operate in conjunction with fiber optic signals. Using fiber optic communication can enhance the signal transmitted from a repeater to a wireless device or wireless communication access point by: (i) decreasing the degree of loss in the signal, (ii) increasing the coverage volume of the signal with less loss, and (iii) minimizing the number of repeaters used for the coverage volume. For example, a large university campus can use fiber optic communication in conjunction with repeaters to provide a substantially loss-less signal over a wider area. Or, in the case of a 100-floor skyscraper, a fiber optic signal can be distributed throughout the building on each floor.

Disclosed herein is a repeater that can be configured to operate in both an RF mode and a fiber optic mode for uplink communication. When the repeater is operating in the RF mode, RF signal to fiber optic signal conversion may not used but can still be present in the repeater. When the repeater is operating in the fiber optic mode, RF to fiber optic conversion can be used in close proximity to the repeater and the resulting fiber optic signal can be physically distributed to other areas as desired. Once the fiber optic signal has been physically distributed to a particular area, the fiber optic signal can be converted back to an RF signal at a remote antenna unit. The remote antenna unit can transmit the RF signal to a wireless communication access point.

Similarly, when the repeater is used in a fiber optic mode for downlink communication, the remote antenna unit can receive an RF signal from a wireless communication access point and convert the RF signal to a fiber optic signal that can communicated to a repeater conversion unit to convert the fiber optic signal back to an RF signal. The repeater conversion unit, which can be physically proximate to the repeater, can send the RF signal to the repeater, where the RF signal can be transmitted to a wireless device.

To accommodate the RF mode and the fiber optic mode, the architecture of the repeater, the repeater conversion unit, and the remote antenna unit can be modified to operate in either mode. This can be accomplished by bypassing or attenuating amplification before converting the RF signal to a fiber optic signal in order to reduce the amount of noise and the amount of power. Amplification can be provided after the fiber optic signal has been converted back to an RF signal. In some cases, the signal can be converted from an RF signal, to a fiber optic signal, and back to an RF signal without converting the signal from an analog signal to a digital signal to prevent increased signal loss.

In one embodiment, a repeater can comprise a first antenna port and a second antenna port. The repeater can comprise one or more first direction amplification and filtering paths coupled between the first antenna port and the second antenna port, and one or more second direction amplification and filtering paths coupled between the first antenna port and the second antenna port. The repeater can comprise a controller configured to switch the repeater between a radio frequency (RF) mode or a fiber optic mode. In one aspect, in an RF mode, the repeater can be configured to send a first-direction RF mode RF signal to the second antenna port or receive a second-direction RF signal at the second antenna port. In another aspect, in the fiber optic mode, the repeater can be configured to send a first-direction fiber optic mode RF signal to a fiber-optic RF path or receive a second-direction fiber optic mode RF signal at the fiber-optic RF path.

In another embodiment, a remote antenna unit can comprise one or more first direction amplification and filtering paths operable to receive, from a repeater, a low-noise amplified and filtered first-direction signal for amplification, at the remote antenna unit, by a power amplifier (PA). The remote antenna unit can comprise one or more second-direction amplification and filtering paths operable to send, from the remote antenna unit, a low-noise amplified and filtered second-direction signal for amplification, at the repeater, by a PA. The remote antenna unit can comprise a first-direction fiber optic to radio frequency (RF) converter operable to receive the low-noise amplified and filtered first-direction signal from the repeater, and a second direction RF to fiber optic converter operable to send the low-noise amplified and filtered second-direction signal to the repeater. The remote antenna unit can comprise a communication port configured to receive a fiber optic mode activation signal.

In another embodiment, a repeater conversion unit can comprise a first direction radio frequency (RF) to fiber optic converter operable to: receive a low-noise amplified and filtered first-direction RF signal from a repeater, convert the low-noise amplified and filtered first-direction RF signal to a low-noise amplified and filtered first-direction fiber optic signal, and send the low-noise amplified and filtered first-direction fiber optic signal to a remote antenna unit. The repeater conversion unit can comprise a second direction fiber optic to RF converter operable to: receive a low-noise amplified and filtered second-direction fiber optic signal from the remote antenna unit, convert the low-noise amplified and filtered first-direction fiber optic signal to a low-noise amplified and filtered first-direction RF signal, and send the low-noise amplified and filtered first-direction RF signal to the repeater.

In yet another embodiment, a machine readable storage medium can have instructions embodied thereon, the instructions, when executed by a processor, can comprise: identifying a radio frequency (RF) mode or a fiber optic mode; deactivating, at the repeater, a first-direction RF amplification and filtering path when the fiber optic mode has been identified; and activating, at the repeater, a first-direction fiber-optic RF path when the fiber optic mode has been identified.

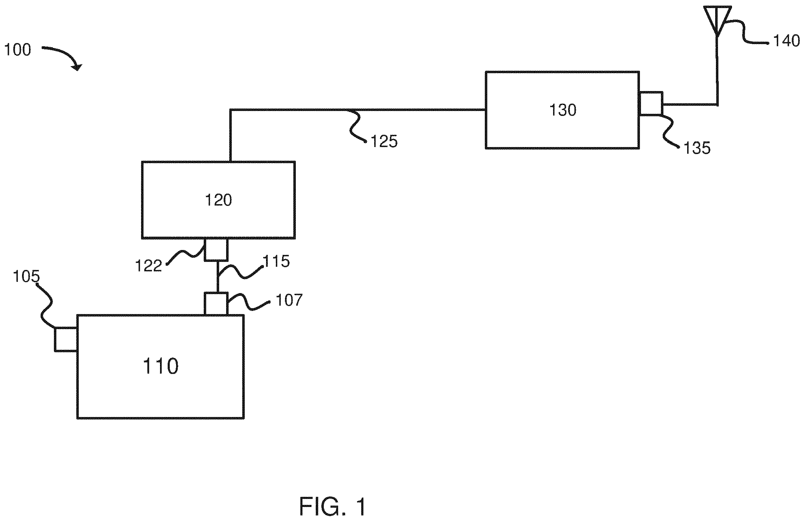

In one example, as illustrated in FIG. 1, a repeater 110 can comprise a first antenna port 105, and a second antenna port 107. The repeater 110 can comprise one or more first-direction (i.e., uplink or downlink) amplification and filtering paths coupled between the first antenna port 105 and the second antenna port 107. The repeater 110 can comprise one or more second direction (i.e., downlink when the first direction is uplink and uplink when the first direction is downlink) amplification and filtering paths coupled between the first antenna port 105 and the second antenna port 107. The repeater can comprise a controller (not shown) configured to switch the repeater between a radio frequency (RF) mode or a fiber optic mode.

In another example, the repeater 110 can be configured to be coupled to a remote antenna unit 130. The remote antenna unit 130 can comprise one or more first direction amplification and filtering paths, and one or more second direction amplification and filtering paths. The remote antenna unit 130 can comprise a first-direction fiber optic to radio frequency (RF) converter and a second direction to RF to fiber optic converter. The remote antenna unit 130 can comprise a donor antenna port 135 configured to be coupled to a donor antenna 140.

In another example, the repeater 110 can be configured to be coupled to a repeater conversion unit 120 via a connection 115 (e.g., a coaxial connection) and a port 122. The repeater conversion unit 120 can comprise a first-direction radio frequency (RF) to fiber optic converter operable to receive a low-noise amplified and filtered first-direction RF signal from a repeater 110. The repeater conversion unit 120 can be configured to convert the low-noise amplified and filtered first-direction RF signal to a low-noise amplified and filtered first-direction fiber optic signal and send the low-noise amplified and filtered first-direction fiber optic signal to a remote antenna unit 130 via a fiber optic connection 125.

In another example, the repeater conversion unit 120 can comprise a second-direction fiber optic to RF converter. The repeater conversion unit 120 can be configured to receive a low-noise amplified and filtered second-direction fiber optic signal from the remote antenna unit 130, convert the low-noise amplified and filtered first-direction fiber optic signal to a low-noise amplified and filtered first-direction RF signal, and send the low-noise amplified and filtered first-direction RF signal to the repeater 110.

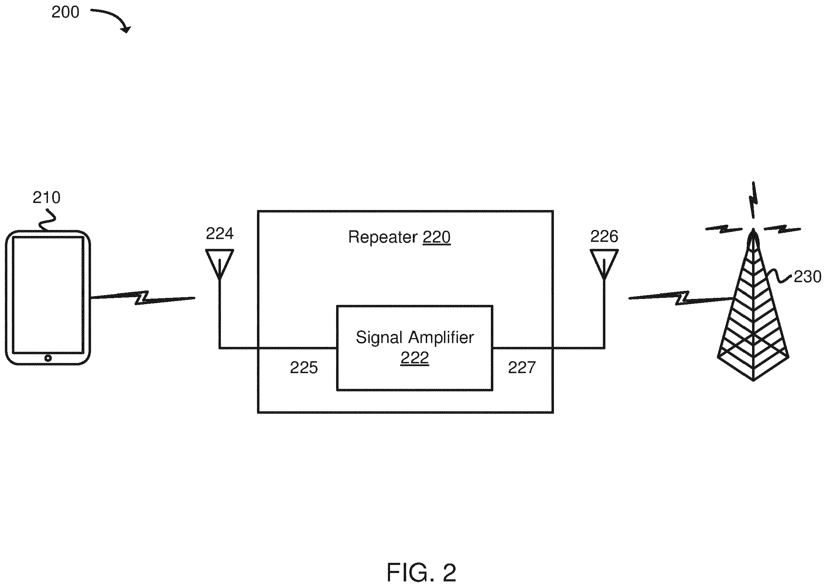

FIG. 2 illustrates a cellular communication system 200 that comprises one or more user equipment (UEs) (e.g., 210) that are in wireless communication with one or more base stations (e.g., 230). The communication range between the UE 210 and base station 230 is limited based on distance between the UE 210 and base station 230, government limitations on transmission power, interference, and other considerations. While one base station is illustrated in this example, it is not intended to be limiting. A cellular communication system can include hundreds, or thousands of different base stations. Different types of base stations can also be used, including traditional high power base stations designed to cover a broad range of up to kilometers of area, down to relatively low power base stations designed to be at a user's operating location and communicate hundreds of feet. The cellular communication system 200 can have wired or wireless connections with the base station 230. The cellular communication system 200 can include additional cellular communications equipment that can be used to process cellular signals and provide information and instructions to the base station 230 and/or UE 210 for communication within the cellular communication system 200.

FIG. 2 illustrates an exemplary repeater 220 in communication with a wireless device 210 and a base station 230. The repeater 220 can be referred to as a signal booster. A repeater can be an electronic device used to amplify (or boost) signals. The repeater 220 (also referred to as a cellular signal amplifier) can improve the quality of wireless communication by amplifying, filtering, and/or applying other processing techniques via a signal amplifier 222 to uplink signals communicated from the wireless device 210 to the base station 230 and/or downlink signals communicated from the base station 230 to the wireless device 210. In other words, the repeater 220 can amplify or boost uplink signals and/or downlink signals bi-directionally. In one example, the repeater 220 can be at a fixed location, such as in a home or office. Alternatively, the repeater 220 can be attached to a mobile object, such as a vehicle or a wireless device 210.

In one configuration, the repeater 220 can include a server antenna 224 (e.g., an inside antenna, device antenna, or a coupling antenna) and a donor antenna 226 (e.g., a node antenna or an outside antenna). The donor antenna 226 can receive the downlink signal from the base station 230. The downlink signal can be provided to the signal amplifier 222 via a second coaxial cable 227 or other type of radio frequency connection operable to communicate radio frequency signals. The signal amplifier 222 can include one or more cellular signal amplifiers for amplification and filtering. The downlink signal that has been amplified and filtered can be provided to the server antenna 224 via a first coaxial cable 225 or other type of radio frequency connection operable to communicate radio frequency signals. The server antenna 224 can wirelessly communicate the downlink signal that has been amplified and filtered to the wireless device 210.

Similarly, the server antenna 224 can receive an uplink signal from the wireless device 210. The uplink signal can be provided to the signal amplifier 222 via the first coaxial cable 225 or other type of radio frequency connection operable to communicate radio frequency signals. The signal amplifier 222 can include one or more cellular signal amplifiers for amplification and filtering. The uplink signal that has been amplified and filtered can be provided to the donor antenna 226 via the second coaxial cable 227 or other type of radio frequency connection operable to communicate radio frequency signals. The server antenna 226 can communicate the uplink signal that has been amplified and filtered to the base station 230.

In one example, the repeater 220 can filter the uplink and downlink signals using any suitable analog or digital filtering technology including, but not limited to, surface acoustic wave (SAW) filters, bulk acoustic wave (BAW) filters, film bulk acoustic resonator (FBAR) filters, ceramic filters, waveguide filters or low-temperature co-fired ceramic (LTCC) filters.

In one example, the repeater 220 can send uplink signals to a node and/or receive downlink signals from the node. The node can comprise a wireless wide area network (WWAN) access point (AP), a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or another type of WWAN access point.

In one example, the repeater 220 can include a battery to provide power to various components, such as the signal amplifier 222, the server antenna 224 and the donor antenna 226. The battery can also power the wireless device 210 (e.g., phone or tablet). Alternatively, the repeater 220 can receive power from the wireless device 210.

In one configuration, the repeater, also referred to as a repeater 220, can be a Federal Communications Commission (FCC)-compatible consumer repeater. As a non-limiting example, the repeater 220 can be compatible with FCC Part 20 or 47 Code of Federal Regulations (C.F.R.) Part 20.21 (March 21, 2013). In addition, the handheld booster can operate on the frequencies used for the provision of subscriber-based services under parts 22 (Cellular), 24 (Broadband PCS), 27 (AWS-1, 700 megahertz (MHz) Lower A-E Blocks, and 700 MHz Upper C Block), and 90 (Specialized Mobile Radio) of 47 C.F.R. The repeater 220 can be configured to automatically self-monitor its operation to ensure compliance with applicable noise and gain limits. The repeater 220 can either self-correct or shut down automatically if the repeater's operations violate the regulations defined in 47 CFR Part 20.21. While a repeater that is compatible with FCC regulations is provided as an example, it is not intended to be limiting. The repeater can be configured to be compatible with other governmental regulations based on the location where the repeater is configured to operate.

In one configuration, the repeater 220 can improve the wireless connection between the wireless device 210 and the base station 230 (e.g., cell tower) or another type of wireless wide area network (WWAN) access point (AP) by amplifying desired signals relative to a noise floor. The repeater 220 can boost signals for cellular standards, such as the Third Generation Partnership Project (3GPP) Long Term Evolution (LTE) Release 8, 9, 10, 11, 12, 13, 14, 15, or 16 standards or Institute of Electronics and Electrical Engineers (IEEE) 802.16. In one configuration, the repeater 220 can boost signals for 3GPP LTE Release 16.7.0 (October 2020) or other desired releases.

The repeater 220 can boost signals from the 3GPP Technical Specification (TS) 36.101 (Release 16.7.0 October 2020) bands, referred to as LTE frequency bands. For example, the repeater 220 can boost signals from one or more of the LTE frequency bands: 2, 4, 5, 12, 13, 17, 25, and 26. In addition, the repeater 220 can boost selected frequency bands based on the country or region in which the repeater is used, including any of bands 1-85 or other bands, as disclosed in 3GPP TS 36.104 V16.1.0 (March 2019), and depicted in Table 1:

**Table 1:**

| **LTE Opera ting Band** | **Uplink (UL) operating band BS receive** | | | **Downlink (DL) operating band BS transmit** | | | **Duplex Mode** |
|---|---|---|---|---|---|---|---|
| | **UE transmit** | | | **UE receive** | | | |
| | **F_{UL_low}** | - | **F_{UL_high}** | **F_{DL_low}** | - | **F_{DL_high}** | |
| 1 | 1920 MHz | - | 1980 MHz | 2110 MHz | - | 2170 MHz | FDD |
| 2 | 1850 MHz | - | 1910 MHz | 1930 MHz | - | 1990 MHz | FDD |
| 3 | 1710 MHz | - | 1785 MHz | 1805 MHz | - | 1880 MHz | FDD |
| 4 | 1710 MHz | - | 1755 MHz | 2110 MHz | - | 2155 MHz | FDD |
| 5 | 824 MHz | - | 849 MHz | 869 MHz | - | 894MHz | FDD |
| 6 (NOT E 1) | 830 MHz | | 840 MHz | 875 MHz | - | 885 MHz | FDD |
| 7 | 2500 MHz | - | 2570 MHz | 2620 MHz | | - 2690 MHz | FDD |
| 8 | 880 MHz | - | 915 MHz | 925 MHz | - | 960 MHz | FDD |
| 9 | 1749.9 MHz | - | 1784.9 MHz | 1844.9 MHz | - | 1879.9 MHz | FDD |
| 10 | 1710 MHz | - | 1770 MHz | 2110 MHz | - | 2170 MHz | FDD |
| 11 | 1427.9 MHz | - | 1447.9 MHz | 1475.9 MHz | - | 1495.9 MHz | FDD |
| 12 | 699 MHz | - | 716 MHz | 729 MHz | - | 746 MHz | FDD |
| 13 | 777 MHz | - | 787 MHz | 746 MHz | - | 756 MHz | FDD |
| 14 | 788 MHz | - | 798 MHz | 758 MHz | - | 768 MHz | FDD |
| 15 | Reserve d | | | Reserve d | | | FDD |
| 16 | Reserve d | | | Reserve d | | | FDD |
| 17 | 704 MHz | - | 716 MHz | 734 MHz | - | 746 MHz | FDD |
| 18 | 815 MHz | - | 830 MHz | 860 MHz | - | 875 MHz | FDD |
| 19 | 830 MHz | - | 845 MHz | 875 MHz | - | 890 MHz | FDD |
| 20 | 832 MHz | - | 862 MHz | 791 MHz | - | 821 MHz | FDD |
| 21 | 1447.9 MHz | - | 1462.9 MHz | 1495.9 MHz | - | 1510.9 MHz | FDD |
| 22 | 3410 MHz | - | 3490 MHz | 3510 MHz | - | 3590 MHz | FDD |
| 23¹ | 2000 MHz | - | 2020 MHz | 2180 MHz | - | 2200 MHz | FDD |
| 24 | 1626.5 MHz | - | 1660.5 MHz | 1525 MHz | - | 1559 MHz | FDD |
| 25 | 1850 MHz | - | 1915 MHz | 1930 MHz | - | 1995 MHz | FDD |
| 26 | 814 MHz | - | 849 MHz | 859 MHz | - | 894 MHz | FDD |
| 27 | 807 MHz | - | 824 MHz | 852 MHz | - | 869 MHz | FDD |
| 28 | 703 MHz | - | 748 MHz | 758 MHz | - | 803 MHz | FDD |
| 29 | N/A | | | 717 MHz | - | 728 MHz | FDD (NOTE 2) |
| 30 | 2305 MHz | - | 2315 MHz | 2350 MHz | - | 2360 MHz | FDD |
| 31 | 452.5 MHz | - | 457.5 MHz | 462.5 MHz | - | 467.5 MHz | FDD |
| 32 | N/A | | | 1452 MHz | - | 1496 MHz | FDD (NOTE 2) |
| 33 | 1900 MHz | - | 1920 MHz | 1900 MHz | - | 1920 MHz | TDD |
| 34 | 2010 MHz | - | 2025 MHz | 2010 MHz | - | 2025 MHz | TDD |
| 35 | 1850 MHz | - | 1910 MHz | 1850 MHz | - | 1910 MHz | TDD |
| 36 | 1930 MHz | - | 1990 MHz | 1930 MHz | - | 1990 MHz | TDD |
| 37 | 1910 MHz | - | 1930 MHz | 1910 MHz | | - 1930 MHz | TDD |
| 38 | 2570 MHz | - | 2620 MHz | 2570 MHz | - | 2620 MHz | TDD |
| 39 | 1880 MHz | - | 1920 MHz | 1880 MHz | - | 1920 MHz | TDD |
| 40 | 2300 MHz | - | 2400 MHz | 2300 MHz | - | 2400 MHz | TDD |
| 41 | 2496 MHz | - | 2690 MHz | 2496 MHz | - | 2690 MHz | TDD |
| 42 | 3400 MHz | - | 3600 MHz | 3400 MHz | - | 3600 MHz | TDD |
| 43 | 3600 MHz | - | 3800 MHz | 3600 MHz | - | 3800 MHz | TDD |
| 44 | 703 MHz | - | 803 MHz | 703 MHz | - | 803 MHz | TDD |
| 45 | 1447 MHz | - | 1467 MHz | 1447 MHz | - | 1467 MHz | TDD |
| 46 | 5150 MHz | - | 5925 MHz | 5150 MHz | - | 5925 MHz | TDD (NOTE 3, NOTE 4) |
| 47 | 5855 MHz | - | 5925 MHz | 5855 MHz | - | 5925 MHz | TDD |
| 48 | 3550 MHz | - | 3700 MHz | 3550 MHz | - | 3700 MHz | TDD |
| 49 | 3550 MHz | - | 3700 MHz | 3550 MHz | - | 3700 MHz | TDD (NOTE 8) |
| 50 | 1432 MHz | - | 1517 MHz | 1432 MHz | - | 1517 MHz | TDD |
| 51 | 1427 MHz | - | 1432 MHz | 1427 MHz | - | 1432 MHz | TDD |
| 52 | 3300 MHz | - | 3400 MHz | 3300 MHz | - | 3400 MHz | TDD |
| 53 | 2483.5 MHz | - | 2495 MHz | 2483.5 MHz | - | 2495 MHz | TDD |
| 65 | 1920 MHz | - | 2010 MHz | 2110 MHz | - | 2200 MHz | FDD |
| 66 | 1710 MHz | - | 1780 MHz | 2110 MHz | - | 2200 MHz | FDD (NOTE 5) |
| 67 | N/A | | | 738 MHz | - | 758 MHz | FDD (NOTE 2) |
| 68 | 698 MHz | - | 728 MHz | 753 MHz | - | 783 MHz | FDD |
| 69 | N/A | | | 2570 MHz | - | 2620 MHz | FDD (NOTE 2) |
| 70 | 1695 MHz | - | 1710 MHz | 1995 MHz | - | 2020 MHz | FDD⁶ |
| 71 | 663 MHz | - | 698 MHz | 617 MHz | - | 652 MHz | FDD |
| 72 | 451 MHz | - | 456 MHz | 461 MHz | - | 466 MHz | FDD |
| 73 | 450 MHz | - | 455 MHz | 460 MHz | - | 465 MHz | FDD |
| 74 | 1427 MHz | - | 1470 MHz | 1475 MHz | - | 1518 MHz | FDD |
| 75 | N/A | | | 1432 MHz | - | 1517 MHz | FDD (NOTE 2) |
| 76 | N/A | | | 1427 MHz | - | 1432 MHz | FDD (NOTE 2) |
| 85 | 698 MHz | | - | 728 MHz | - | 746 MHz | FDD |
| | | 716 MHz | | | | | |
| NOTE 1: | Band 6, 23 are not applicable. | | | | | | |
| NOTE 2: | Restricted to E-UTRA operation when carrier aggregation is configured. The downlink operating band is paired with the uplink operating band (external) of the carrier aggregation configuration that is supporting the configured Pcell. | | | | | | |
| NOTE 3: | This band is an unlicensed band restricted to licensed-assisted operation using Frame Structure Type 3. | | | | | | |
| NOTE 4: | Band 46 is divided into four sub-bands as in Table 5.5-1A. | | | | | | |
| NOTE 5: | The range 2180 - 2200 MHz of the DL operating band is restricted to E-UTRA operation when carrier aggregation is configured. | | | | | | |
| NOTE 6: | The range 2010-2020 MHz of the DL operating band is restricted to E-UTRA operation when carrier aggregation is configured and TX-RX separation is 300 MHz. The range 2005-2020 MHz of the DL operating band is restricted to E-UTRA operation when carrier aggregation is configured and TX-RX separation is 295 MHz. | | | | | | |
| NOTE 7: | Void | | | | | | |
| NOTE 8: | This band is restricted to licensed-assisted operation using Frame Structure Type 3. | | | | | | |

In another configuration, the repeater 220 can boost signals from the 3GPP Technical Specification (TS) 38.104 (Release 16.5.0 October 2020) bands, referred to as 5G frequency bands. In addition, the repeater 220 can boost selected frequency bands based on the country or region in which the repeater is used, including any of bands n1 - n86 in frequency range 1 (FR1), n257 - n261 in frequency range 2 (FR2), or other bands, as disclosed in 3GPP TS 38.104 V16.5.0 (October 2020), and depicted in Table 2 and Table 3:

**Table 2:**

| **NR *operating band*** | **Uplink (UL) *operating band*** | **Downlink (DL) *operating band*** | **Duplex Mode** |
|---|---|---|---|
| | **BS receive / UE transmit** | **BS transmit / UE receive** | |
| | **F_{UL,low}** - **F_{UL,high}** | **F_{DL,low} - F_{DL,high}** | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz -716 MHz | 729 MHz -746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz -748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD |
| n51 | 1427 MHz - 1432 MHz | 1427 MHz - 1432 MHz | TDD |
| n65 | 1920 MHz - 2010 MHz | 2110 MHz - 2200 MHz | FDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

**Table 3:**

| **NR *operating band*** | **Uplink (UL) and Downlink (DL) *operating band*** | **Duplex Mode** |
|---|---|---|
| | **BS transmit/receive** | |
| | **UE transmit/receive** | |
| | **F_{UL,low} - F_{UL,high}** | |
| | **F_{DL,low} - F_{DL,high}** | |
| n257 | 26500 MHz - 29500 MHz | TDD |
| n258 | 24250 MHz - 27500 MHz | TDD |
| n260 | 37000 MHz - 40000 MHz | TDD |
| n261 | 27500 MHz - 28350 MHz | TDD |

The number of 3GPP LTE or 5G frequency bands and the level of signal improvement can vary based on a particular wireless device, cellular node, or location. Additional domestic and international frequencies can also be included to offer increased functionality. Selected models of the repeater 220 can be configured to operate with selected frequency bands based on the location of use. In another example, the repeater 220 can automatically sense from the wireless device 210 or base station 230 (or GPS, etc.) which frequencies are used, which can be a benefit for international travelers.

In one example, the repeater can be configured to transmit a downlink (DL) signal in a millimeter wave (mm Wave) frequency range, and transmit an uplink (UL) signal in a sub-6 gigahertz (GHz) frequency range. In this example, a mm Wave frequency range can be a frequency between 6 GHz and 300 GHz.

In one configuration, multiple repeaters can be used to amplify UL and DL signals. For example, a first repeater can be used to amplify UL signals and a second repeater can be used to amplify DL signals. In addition, different repeaters can be used to amplify different frequency ranges.

In one configuration, the repeater 220 can be configured to identify when the wireless device 210 receives a relatively strong downlink signal. An example of a strong downlink signal can be a downlink signal with a signal strength greater than approximately -80dBm. The repeater 220 can be configured to automatically turn off selected features, such as amplification, to conserve battery life. When the repeater 220 senses that the wireless device 210 is receiving a relatively weak downlink signal, the booster can be configured to provide amplification of the downlink signal. An example of a weak downlink signal can be a downlink signal with a signal strength less than -80dBm.

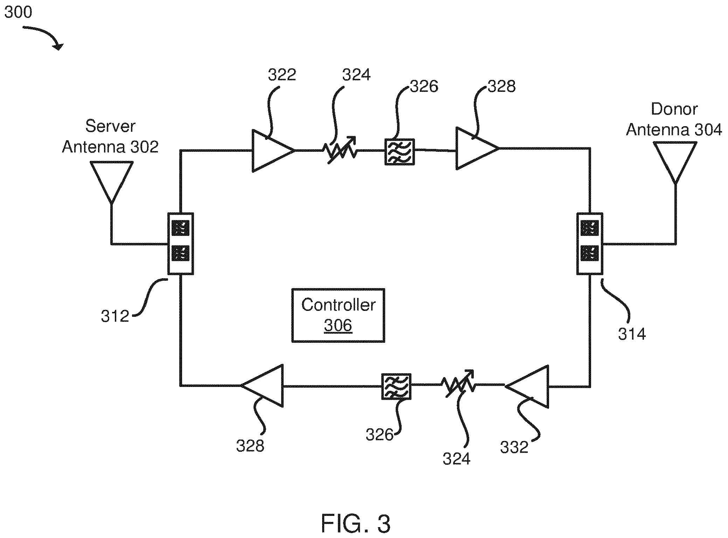

In an example, as illustrated in FIG. 3, a bi-directional repeater system can comprise a repeater 300 connected to a donor antenna 304 and a server antenna 302. The repeater 300 can include a donor antenna port that can be internally coupled to a second duplexer (or diplexer or multiplexer or circulator or splitter) 314. The repeater 300 can include a server antenna port that can also be coupled to a first duplexer (or diplexer or multiplexer or circulator or splitter) 312. Between the two duplexers, 314 and 312, can be two paths: a first path and a second path. The first path can comprise a low noise amplifier (LNA) with an input coupled to the first duplexer 312, a variable attenuator coupled to an output of the LNA, a filter coupled to the variable attenuator, and a power amplifier (PA) coupled between the filter and the second duplexer 314. The LNA can amplify a lower power signal without degrading the signal to noise ratio. The PA can adjust and amplify the power level by a desired amount. A second path can comprise an LNA with an input coupled to the second duplexer 314, a variable attenuator coupled to an output of the LNA, a filter coupled to the variable attenuator, and a PA coupled between the filter and the first duplexer 312. The first path can be a downlink amplification path or an uplink amplification path. The second path can be a downlink amplification path or an uplink amplification path. The repeater 300 can also comprise a controller 306. In one example, the controller 306 can include one or more processors and memory.

In some embodiments the controller 306 can adjust the gain of the first path and/or the second path based on wireless communication conditions. If included in the repeater 300, the controller 306 can be implemented by any suitable mechanism, such as a program, software, function, library, software as a service, analog or digital circuitry, or any combination thereof. The controller 306 can also include a processor coupled to memory. The processor can include, for example, a microprocessor, microcontroller, digital signal processor (DSP), application specific integrated circuit (ASIC), a Field Programmable Gate Array (FPGA), or any other digital or analog circuitry configured to interpret and/or to execute program instructions and/or to process data. In some embodiments, the processor can interpret and/or execute program instructions and/or process data stored in the memory. The instructions can include instructions for adjusting the gain of the first path and/or the second path. For example, the adjustments can be based on radio frequency (RF) signal inputs.

The memory can include any suitable computer readable media configured to retain program instructions and/or data for a period of time. By way of example, and not limitation, such computer readable media can include tangible computer readable storage media including random access memory (RAM), read only memory (ROM), electrically erasable programmable read only memory (EEPROM), a compact disk (CD) ROM or other optical disk storage, magnetic disk storage or other magnetic storage devices, flash memory devices (e.g., solid state memory devices) or any other storage medium which can be used to carry or store desired program code in the form of computer executable instructions or data structures and which can be accessed by a general purpose or special purpose computer. Combinations of the above can also be included within the scope of computer readable media. Computer executable instructions can include, for example, instructions and data that cause a general purpose computer, special purpose computer, or special purpose processing device to perform a certain function or group of functions.

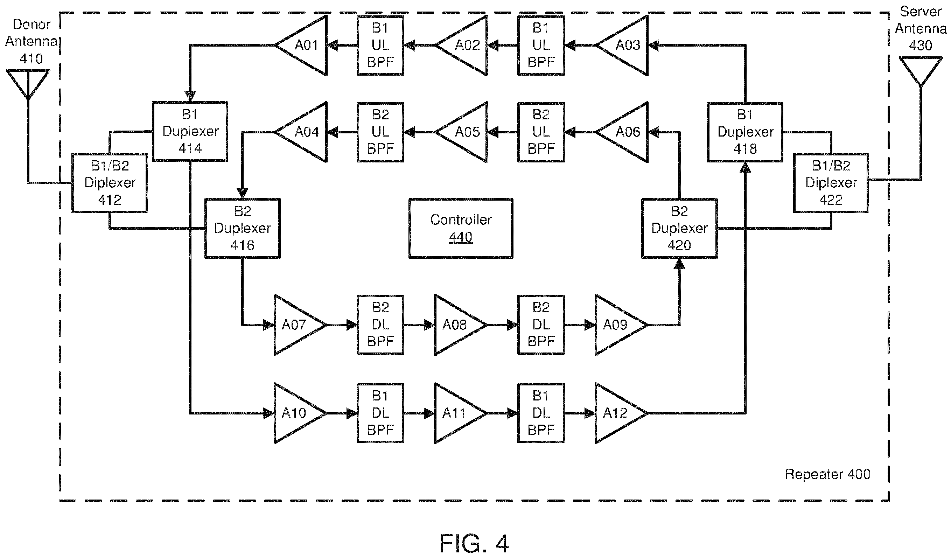

In another example, as illustrated in FIG. 4, a repeater can be configured as a multiband bi-directional FDD wireless signal booster 400 configured to amplify an uplink signal and a downlink signal in multiple bands or channels using a separate signal path for one or more uplink frequency bands or channels and one or more downlink frequency bands or channels. In one embodiment, adjacent bands can be included on a same signal path. A controller 440 can adjust the gain of each signal path based on wireless communication conditions.

A donor antenna 410, or an integrated node antenna, can receive a downlink signal. For example, the downlink signal can be received from a base station. The downlink signal can be provided to a first B1/B2 diplexer 412, wherein B1 represents a first frequency band and B2 represents a second frequency band. The first B1/B2 diplexer 412 can direct selected portions of a received signal to a B1 downlink signal path and a B2 downlink signal path. A downlink signal that is associated with B1 can travel along the B1 downlink signal path to a first B1 duplexer 414. A portion of the received signal that is within the B2 can travel along the B2 downlink signal path to a first B2 duplexer 416. After passing the first B1 duplexer 414, the downlink signal can travel through a series of amplifiers (e.g., A10, A11, and A12) and downlink bandpass filters (e.g., B1 DL BPF) to a second B1 duplexer 418. In addition, the B2 downlink signal passing through the B2 duplexer 416, can travel through a series of amplifiers (e.g., A07, A08, and A09) and downlink band pass filters (e.g., B2 DL BPF) to a second B2 duplexer 420. At this point, the downlink signals (B1 or B2) have been amplified and filtered in accordance with the type of amplifiers and BPFs included in the multiband bi-directional wireless signal booster 400. The downlink signals from the second B1 duplexer 418 or the second B2 duplexer 420, respectively, can be provided to a second B1/B2 diplexer 422. The second B1/B2 diplexer 422 can direct the B1/B2 amplified downlink signal to a server antenna 430, or an integrated device antenna. The server antenna 430 can communicate the amplified downlink signal to a wireless device, such as a UE.

In another example, the server antenna 430 can receive an uplink (UL) signal from a wireless device. The uplink signal can include a first frequency range, such as a Band 1 signal and a second frequency range, such as a Band 2 signal. The uplink signal can be provided to the second B1/B2 diplexer 422. The second B1/B2 diplexer 422 can direct the signals, based on their frequency, to a B1 uplink signal path and a B2 uplink signal path. An uplink signal that is associated with B1 can travel along the B1 uplink signal path to a second B1 duplexer 418, and an uplink signal that is associated with B2 can travel along the B2 uplink signal path to a second B2 duplexer 420. The second B1 duplexer 418 can direct the B1 uplink signal to travel through a series of amplifiers (e.g., A01, A02, and A03) and uplink bandpass filters (B1 UL BPF) to the first B1 duplexer 414. In addition, the second B2 duplexer 420 can direct the B2 uplink signal to travel through a series of amplifiers (e.g., A04, A05, and A06) and downlink band pass filters (B2 UL BPF) to the first B2 duplexer 416. At this point, the uplink signals (B1 and B2) have been amplified and filtered in accordance with the type of amplifiers and BPFs included in the bi-directional wireless signal booster 400. The uplink signals from the first B1 duplexer 414 and the first B2 duplexer 416, respectively, can be provided to the first B1/B2 diplexer 412. The first B1/B2 diplexer 412 can direct the B1 and B2 amplified uplink signals to the donor antenna 410, or an integrated device antenna. The donor antenna 410 can communicate the amplified uplink signals to a base station.

A repeater can comprise one or more amplification and filtering paths that can be configured to increase gain on an RF signal using low-noise amplification before the RF signal is converted to a fiber optic signal. After the fiber optic signal has been converted back to an RF signal, the RF signal can be amplified using a power amplifier. Power amplification after converting a signal back to an RF signal from a fiber optic signal can reduce the noise figure compared to a scenario in which the power amplification is provided before conversion back to an RF signal from a fiber optic signal.

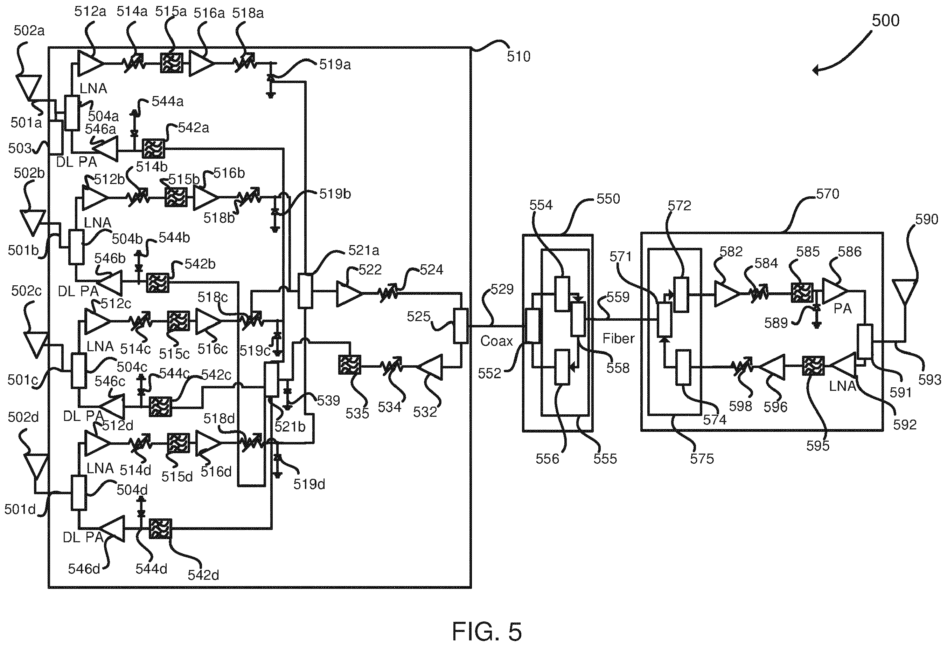

In one example, as illustrated in FIG. 5, a repeater 510 can include a first antenna port (e.g., 501a, 501b, 501c, 501d) configured to be coupled to a first antenna (e.g., 502a, 502b, 502c, 502d). The first antenna (e.g., 502a, 502b, 502c, 502d) can be configured to receive uplink signals from a user equipment and transmit uplink signals to the first antenna port (e.g., 501a, 501b, 501c, 501d). The first antenna (e.g., 502a, 502b, 502c, 502d) can be configured to receive downlink signals from the first antenna port (e.g., 501a, 501b, 501c, 501d) and transmit downlink signals to the user equipment. The repeater can further comprise one or more connections (e.g., 503) from each antenna port 501a, 501b, 501c, 501d to a modem 503.

In another example, the repeater 510 can be configured to communicate with a second antenna port 593 that can be configured to be coupled to a second antenna 590. The second antenna 590 can be configured to receive uplink signals from the second antenna port 593 and transmit uplink signals to a base station. The second antenna 590 can be configured to receive downlink signals from the base station and send the downlink signals to the second antenna port 593. In one example, the second antenna port 593 and second antenna 590 can be coupled to a remote antenna unit 570, as illustrated in FIG. 5. In another example, the second antenna port 227 and the second antenna 226 can be coupled to the repeater 220, as illustrated in FIG. 2.

In another example, the repeater 510 can comprise one or more first direction amplification and filtering paths coupled between the first antenna port (e.g., 501a, 501b, 501c, 501d) and the second antenna port 593. The one or more first direction amplification and filtering paths can be positioned within the repeater 510, or within an adjacent unit (e.g., 550), or within any combination of the repeater 510, the adjacent unit 550, the remote antenna unit 570, the like, or a combination thereof.

In one example, the one or more first-direction amplification and filtering paths can include any number of first-direction amplification and filtering paths that can amplify and filter the desired number of frequency ranges, sub-ranges, channels, bands, the like, or a combination thereof. As illustrated in FIG. 5, the one or more first-direction amplification and filtering paths can include four first-direction amplification and filtering paths.

In another example, a first-direction amplification and filtering path can include any suitable number of low-noise amplifiers (LNAs), attenuators, filters, power amplifiers, detectors, the like, or combinations thereof to amplify and filter the desired frequency range, sub-range, channel, band, the like, or a combination thereof. In one example, a first-direction can be an uplink direction and the first-direction amplification and filtering path can include one or more of an LNA (e.g., 512a, 512b, 512c, 512d), an attenuator (514a, 514b, 514c, 514d), a filter (515a, 515b, 515c, 515d), an amplifier (516a, 516b, 516c, 516d), an attenuator (518a 518b, 518c, 518d), a detector (519a, 519b, 519c, 519d), the like, or a combination thereof.

In another example, each first direction amplification and filtering path can comprise a splitter 521a. The splitter 521a can be coupled to one or more paths (e.g., 4 paths as shown). The splitter 521a can be further coupled to an amplifier 522, an attenuator 524, and a duplexer 525. In one example, the duplexer 525 can be coupled to a coaxial cable 529 that can be coupled to a repeater conversion unit 550. In another example, the duplexer 525 can be coupled to a donor antenna port (see e.g., 314 and 304 in FIG. 3).

In one example, the repeater 510 can comprise one or more second-direction amplification and filtering paths coupled between the first antenna port (501a, 501b, 501c, 501d) and the second antenna port 593. The one or more second-direction amplification and filtering paths can be positioned within the repeater 510, or within a repeater conversion unit (e.g., 550), or within any combination of the repeater 510, the repeater conversion unit 550, the remote antenna unit 570, the like, or a combination thereof.

In one example, the one or more second-direction amplification and filtering paths can include any number of second-direction amplification and filtering paths that can amplify and filter the desired number of frequency ranges, sub-ranges, channels, bands, the like, or a combination thereof. As illustrated in FIG. 5, the one or more second-direction amplification and filtering paths can include four second-direction amplification and filtering paths.

In another example, a second-direction amplification and filtering path can include any suitable number of low-noise amplifiers (LNAs), attenuators, filters, power amplifiers, detectors, the like, or combinations thereof to amplify and filter the desired frequency range, sub-range, channel, band, the like, or a combination thereof. In one example, a second direction can be a downlink direction and the second-direction amplification and filtering path can include one or more of an LNA (e.g., 592), a filter (595, 535, 542a, 542b, 542c, 542d), an amplifier (596, 532), an attenuator (598, 534), a detector (539, 544a, 544b, 544c, 544d), a downlink power amplifier (546a, 546b, 546c, 546d), the like, or a combination thereof.

In another example, each second direction amplification and filtering path can comprise a splitter 521b. The splitter 521b can be coupled to one or more paths (e.g., 4 paths as shown). The splitter 521b can be further coupled to a detector 539, a filter 535, an attenuator 534, an amplifier 532, the like, or a combination thereof.

In another example, the repeater 510 can be configured to be coupled to a repeater conversion unit 550. The repeater conversion unit 550 can comprise a duplexer 552 that can be configured to receive an RF signal via the connection 529 from the repeater 510. The connection 529 can be used to direct an RF signal to the repeater conversion unit 550 in a fiber optic mode. The repeater conversion unit 550 can comprise an RF over fiber TX unit 554 and an RF over fiber RX unit 556. The repeater conversion unit 550 can comprise a wavelength division multiplexer 558.

In another example, the wavelength division multiplexer 558 can be coupled via a fiber optic connection 559 to a remote antenna unit 570 at a wavelength division multiplexer 571. The wavelength division multiplexer can be coupled to an RF over fiber RX unit 572 and a RF over fiber TX unit 574.

In one example, the remote antenna unit 570 can comprise one or more first-direction (e.g., uplink) amplification and filtering paths and one or more second-direction (e.g., downlink) amplification and filtering paths. The first-direction amplification and filtering path can comprise an amplifier 582, an attenuator 584, a filter 585, a detector 589, and a power amplifier 586. The second-direction amplification and filtering path can comprise an LNA 592, a filter 595, an amplifier 596, an attenuator 598, the like, or a combination thereof.

In another example, the repeater 510 can comprise a controller (not shown) configured to switch between a radio frequency (RF) mode or a fiber optic mode. In one example, the controller can be further configured to receive or send instructions at the repeater 510. In another example, in a radio frequency (RF) mode the repeater 510 can be configured to send a first-direction RF mode RF signal to the second antenna port 590 or receive a second-direction RF signal at the second antenna port 590. In another example in a fiber optic mode, the repeater 510 can be configured to send a first-direction fiber optic mode RF signal to a fiber-optic RF path (e.g., a bypass path or an attenuated path) or receive a second-direction fiber optic mode RF signal at the fiber-optic RF path (e.g., a bypass path or an attenuated path).

In another example, the repeater 510 can be configured to be operable in both RF mode and in fiber optic mode. In one example, when the repeater 510 is operable in fiber optic mode, the repeater 510 can be configured to send a first-direction signal for conversion from an RF signal to a fiber optic signal. In one example, the repeater 510 can be configured to send the first-direction signal for conversion from an RF signal to a fiber optic signal via a coaxial or direct connection 529.

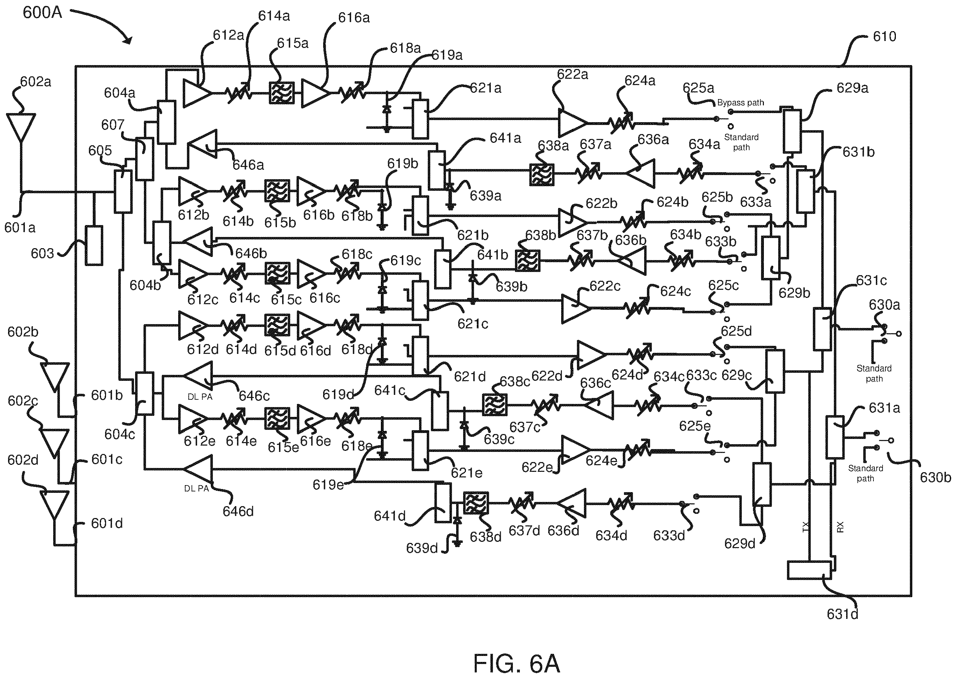

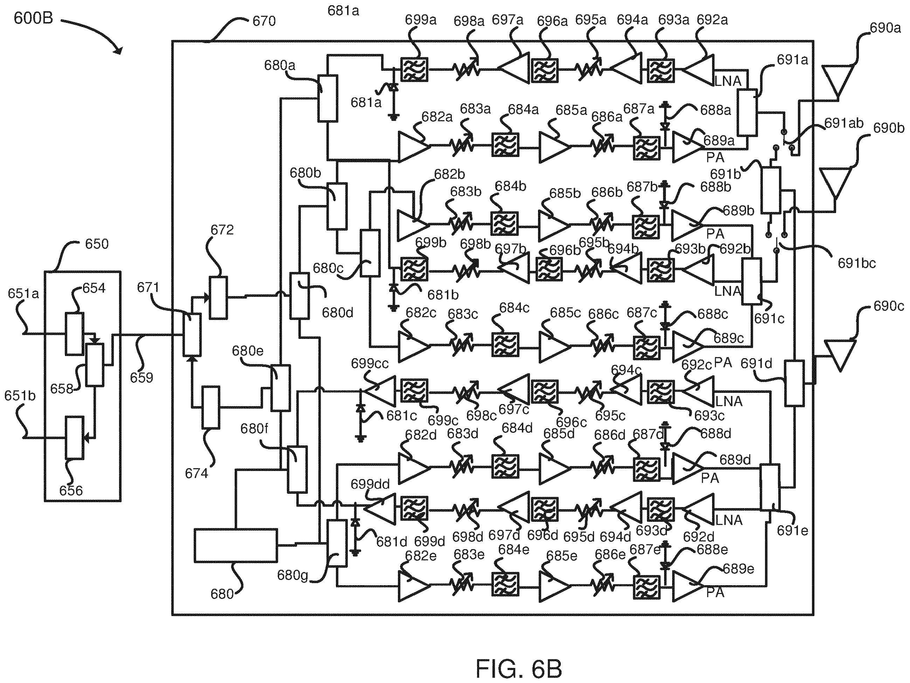

When operating in a fiber optic mode, a fiber optic mode RF signal can be directed to a bypass path (as described with reference to FIGS. 6A and 6B) or an attenuated path before conversion from an RF signal to a fiber optic signal. A bypass path can avoid excessive power amplification or gain before the RF signal is converted to a fiber optic signal by bypassing power amplification components used in an RF mode. The attenuated path can also avoid excessive power amplification before the RF signal is converted to a fiber optic signal by attenuating the gain of the RF signal.

In one example, the one or more first direction attenuated gain paths can be configured to have an attenuated gain for a first-direction signal compared to the gain of the one or more first-direction RF amplification and filtering paths. In another example, the one or more second direction attenuated gain paths can be configured to have an attenuated gain for a second direction signal compared to the gain of the one or more second-direction RF amplification and filtering paths.

In one example, the repeater 510 can be configured to send a first-direction signal to the fiber optic RF path (e.g., a bypass path or attenuated path) for conversion from an RF signal to a fiber optic signal. In another example, the repeater 510 can be configured to receive a second-direction signal at the fiber optic RF path (e.g., a bypass path or attenuated path) after conversion from the fiber optic signal to the RF signal.

In another example, when the repeater 510 is operable in RF mode or fiber optic mode, the repeater 510 can be configured to send the RF signal, the fiber optic signal, or a combination thereof as analog signals without conversion to the digital domain.

In another example, the repeater is configured to operate in accordance with regulations promulgated by a regulatory body when operating in the RF mode or when operating in the fiber optic mode. The regulatory body can include: the Federal Communications Commission (FCC), the European Conference of Postal and Telecommunications Administrations (CEPT), the like, or a combination thereof. In one example, the repeater when operating in RF mode or fiber optic mode can operate in accordance with 47 CFR § 20.21 regulations (e.g., noise limits, bidirectional capability, booster gain limits, power limits, out of band gain limits, intermodulation limits, booster antenna kitting, transmit power off mode, uplink inactivity, interference safeguards including anti-oscillation, gain control, interference avoidance for wireless subsystems, network protection standards, the like, or a combination thereof).

In one example, the repeater 610 can include one or more first-direction fiber optic RF paths (e.g., first-direction bypass paths or first-direction attenuated paths) or one or more second-direction fiber optic RF paths (e.g., second-direction bypass paths or second-direction attenuated paths). The bypass paths can be used in a fiber optic mode to bypass power amplification in the repeater. Power amplification can be provided in the remote antenna unit 670 after the fiber optic signal has been converted back to an RF signal. By providing power amplification in the remote antenna unit rather than the repeater, the noise figure can be reduced when compared to a scenario in which power amplification is provided in the repeater before conversion to a fiber optic signal or before conversion back to an RF signal from a fiber optic signal.

In another example, as illustrated in FIG. 6A, a repeater 610 can include one or more switches 625a, 625b, 625c, 625d, 625e, 633a, 633b, 633c, 633d operable to switch between a fiber optic RF path (e.g., bypass path or attenuated path) or a standard path (e.g., an RF amplification and filtering path). In one example, a bypass path can be configured to direct a first-direction signal (e.g., an uplink signal) for conversion from an RF signal to a fiber optic signal without using a power amplifier. Bypassing power amplification before conversion from an RF signal to a fiber optic signal can reduce the noise figure. In another example, a bypass path can be configured to direct a second-direction signal (e.g., a downlink signal) after conversion from a fiber optic signal to an RF signal for power amplification before being directed to a server antenna port.

In one example, the repeater 610 can comprise one or more first direction fiber optic RF paths (e.g., bypass path or attenuated path) coupled between the first antenna port 601a and the second antenna port 690aa, 690bb, or 690cc. Each antenna port 690aa, 690bb, 690cc can be coupled to an antenna 690a, 690b, 690c. In another example, the repeater 610 can comprise one or more first direction bypass paths coupled between the first antenna port 601a and the switches 630a and 630b positioned before conversion from an RF signal to a fiber optic signal. In another example, the repeater can comprise one or more second direction bypass paths coupled between the first antenna port 601a and the second antenna port 690aa, 690bb, or 690cc. In another example, the repeater can comprise one or more second direction bypass paths coupled between the first antenna port 601a and the switches 630a and 630b.

The controller can be configured to switch between different amplification and filtering paths based on the RF mode or the fiber optic mode. In one example, the controller can be configured to switch between: (i) RF amplification and filtering paths, and (ii) bypass paths or attenuated paths. In another example, the controller can be configured to switch between: (i) the one or more first direction RF amplification and filtering paths, and (ii) the one or more first direction bypass paths or attenuated paths. In yet another example, the controller can be configured to switch between: (i) the one or more second direction RF amplification and filtering paths, and (ii) the one or more second direction bypass paths or attenuated paths.

The fiber optic RF path (e.g., bypass path or attenuated path) can be configured to bypass or attenuate a gain for a first-direction signal or second-direction signal. In one example, the one or more first direction bypass paths can be configured to bypass or attenuate a gain for a first-direction signal. In another example, the one or more second direction bypass paths can be configured to bypass or attenuate a gain for a second direction signal. Bypassing or attenuating gain for a first-direction signal or a second-direction signal can reduce the noise figure when the gain is bypassed or attenuated before conversion to a fiber optic signal from an RF signal.

In another example, a fiber optic path can comprise a bypass path or an attenuated path. The attenuated path can be used to attenuate a gain for a first-direction signal or second direction signal without directing the signal to a bypass path. In this example, a first-direction or second-direction fiber optic mode RF signal can be directed to an attenuated path that can have the same components as an RF amplification and filtering path (e.g., a standard path) but with reduced gain or amplification upon being directed from the RF amplification and filtering path (e.g., the standard path).

The positioning of an LNA or a PA with respect to the amplification and filtering paths present in the repeater, the repeater conversion unit, the remote antenna unit, or a combination thereof can be selected to reduce the noise figure. In one example, the positioning of an LNA can be selected to filter and amplify a first-direction signal on the first direction filtering and amplification path using a low noise amplifier (LNA) before the first-direction signal is converted from an RF signal to a fiber optic signal. In another example, the positioning of the PA can be selected to filter and amplify a second-direction signal on the second direction filtering and amplification path using a power amplifier (PA) after the second-direction signal is converted from a fiber optic signal to an RF signal.

In one example, as similarly described with respect to FIG. 5, a repeater 610 can include a first antenna port (e.g., 601a, 601b, 601c, 601d) configured to be coupled to a first antenna (e.g., 602a, 602b, 602c, 602d). The first antenna (e.g., 602a, 602b, 602c, 602d) can be configured to receive uplink signals from a user equipment and transmit uplink signals to the first antenna port (e.g., 601a, 601b, 601c, 601d). The first antenna (e.g., 602a, 602b, 602c, 602d) can be configured to receive downlink signals from the first antenna port (e.g., 601a, 601b, 601c, 601d) and transmit downlink signals to the user equipment. The repeater can further comprise one or more connections from each antenna port 601a, 601b, 601c, 601d to a modem 603.

In another example, the repeater 610 can comprise one or more first direction amplification and filtering paths coupled between the first antenna port (e.g., 601a, 601b, 601c, 601d) and the switch 625a, 625b, 625c, 625d, 625e. The one or more first direction amplification and filtering paths can be positioned within the repeater 510, or within an adjacent unit (e.g., 550), or within any combination of the repeater 510, the adjacent unit 550, the remote antenna unit 570, the like, or a combination thereof.

In one example, the one or more first-direction amplification and filtering paths can include any number of first-direction amplification and filtering paths that can amplify and filter the desired number of frequency ranges, sub-ranges, channels, bands, the like, or a combination thereof. As illustrated in FIG. 6A, the one or more first-direction amplification and filtering paths can include five first-direction amplification and filtering paths (e.g., (i) between 604a and 625a, (ii) between 604b and 625b, (iii) between 604b and 625c, (iv) between 604c and 625d, and (v) between 604c and 625e).

In another example, the repeater can comprise one or more diplexers, triplexers, quadplexers, multiplexers, or the like that can be configured to be coupled to the one or more first direction amplification and filtering paths and/or the one or more second direction amplification and filtering paths. In one example, a diplexer 605 (e.g., high/low diplexer) can be coupled to a first antenna port 601a, a diplexer 607 (e.g., LTE/cell diplexer), and a quadplexer 604c (e.g., B25/B66 quadplexer). In one example, the diplexer 607 can be coupled to duplexer 604a (e.g., a B5 duplexer) and a triplexer 604b (e.g., B12/B13 triplexer).

In another example, the one or more first-direction amplification and filtering paths can be coupled to one or more switches operable to switch between a fiber optic RF path (e.g., bypass path or attenuated path) and a standard path. Diplexer 629a (e.g., LTE/cell uplink diplexer) can be coupled to switch 625a, diplexer 631c (e.g., high/low uplink diplexer), and triplexer 629b. Triplexer 629b (e.g., B12/B13 triplexer) can be coupled to switch 625b, switch 625c, and diplexer 629a. Quadplexer 629c (e.g., B25/B66 uplink quadplexer) can be coupled to switch 625d, switch 625e, and diplexer 631c (e.g., high/low uplink diplexer). Quadplexer 629d (e.g., B25/B66 downlink quadplexer) can be coupled to switch 633c, switch 633d, and diplexer 631a (e.g., high/low downlink diplexer).

In another example, diplexer 631a (e.g., high/low downlink diplexer) can be coupled to diplexer 631b (e.g., LTE/cell downlink diplexer) and quadplexer 629d. Diplexer 631b can be coupled to switch 633a, switch 633b, and diplexer 631a. Diplexer 631c (e.g., high/low uplink diplexer) can be coupled to diplexer 629a, switch 630a, and quadplexer 629c.

In another example, a communication integrated circuit 631d can be configured to receive a signal from diplexer 631a and transmit a signal to quadplexer 629c and diplexer 631c. The communication signal can send or receive instructions or data to or between the repeater 610, the repeater conversion unit 650, the remote antenna unit 670, or a combination thereof. The communication circuit can be configured to transmit an RF signal comprising instructions or data that has been modulated onto a 2.4 GHz carrier signal between a repeater conversion unit 650 and a remote antenna unit 670 to prevent harmonic interference between the RF signal and the fiber optic signal.

In another example, switch 630a can be configured to direct a first-direction signal via 651a to the repeater conversion unit 650. Switch 630b can be configured to receive a second-direction signal from the repeater conversion unit 650 via 651b.

In another example, a first-direction amplification and filtering path can include any suitable number of low-noise amplifiers (LNAs), attenuators, filters, power amplifiers, detectors, the like, or combinations thereof to amplify and filter the desired frequency range, sub-range, channel, band, the like, or a combination thereof. In one example, a first-direction can be an uplink direction and the first-direction amplification and filtering path can include one or more of an LNA (e.g., 612a, 612b, 612c, 612d, 612e), an attenuator (614a, 614b, 614c, 614d, 614e), a filter (615a, 615b, 615c, 615d, 615e), an amplifier (616a, 616b, 616c, 616d, 616e), an attenuator (618a, 618b, 618c, 618d, 618e), a detector (619a, 619b, 619c, 619d, 619e), the like, or a combination thereof.

In another example, each first direction amplification and filtering path can comprise a splitter 621a, 621b, 621c, 621d, 621e (e.g., a 4-way splitter). The splitter 621a can be coupled to one or more paths (e.g., 5 paths as shown). Each of the splitters 621a, 621b, 621c, 621d, 621e can be further coupled to an amplifier 622a, 622b, 622c, 622d, 622e, an attenuator 624a, 624b, 624c, 624d, 624e, and a switch 625a, 625b, 625c, 625d, 625e.

In one example, the repeater 610 can comprise one or more second-direction amplification and filtering paths coupled between the first antenna port (601a, 601b, 601c, 601d) and the switches 630a and 630b. The one or more second-direction amplification and filtering paths can be positioned within the repeater 610, or within a repeater conversion unit (e.g., 650), or within any combination of the repeater 610, the repeater conversion unit 650, the remote antenna unit 670, the like, or a combination thereof.

In one example, the one or more second-direction amplification and filtering paths can include any number of second-direction amplification and filtering paths that can amplify and filter the desired number of frequency ranges, sub-ranges, channels, bands, the like, or a combination thereof. As illustrated in FIG. 6, the one or more second-direction amplification and filtering paths can include four second-direction amplification and filtering paths.

In another example, a second-direction amplification and filtering path can include any suitable number of low-noise amplifiers (LNAs), attenuators, filters, power amplifiers, detectors, the like, or combinations thereof to amplify and filter the desired frequency range, sub-range, channel, band, the like, or a combination thereof. In one example, a second direction can be a downlink direction and the second-direction amplification and filtering path can include one or more of an attenuator (634a, 634b, 634c, 634d), an amplifier (636a, 636b, 636c, 636d), an attenuator (637a, 637b, 637c, 637d), a filter 638a, 638b, 638c, 638d, a detector 639a, 639b, 639c, 639d, a splitter 641a, 641b, 641c, 641d (e.g., a 4-way splitter), a second-direction PA 646a, 646b, 646c, 646d, the like, or a combination thereof.

In another example, as illustrated in FIGS. 6A and 6B, a repeater system can include a repeater 610 that can be configured to be coupled to a repeater conversion unit 650. The repeater conversion unit 650 can comprise a first-direction connection 651a that can be configured to receive a fiber optic mode RF signal via an uplink connection from the repeater 610 and a second-direction connection 651b that can be configured to direct a fiber optic mode RF signal to the repeater 610. The connection 651a can be used to direct a fiber optic mode RF signal to the repeater conversion unit 650 in a fiber optic mode, and the connection 651b can be used to direct a fiber optic mode RF signal to the repeater 610 in a fiber optic mode. The repeater conversion unit 650 can comprise an RF over fiber TX unit 654 and an RF over fiber RX unit 656. The repeater conversion unit 650 can comprise a wavelength division multiplexer 658.

In another example, the wavelength division multiplexer 658 can be coupled via a fiber optic connection 659 to a remote antenna unit 670 at a wavelength division multiplexer 671. The wavelength division multiplexer 671 can be coupled to an RF over fiber RX unit 672 and an RF over fiber TX unit 674.

In one example, the remote antenna unit 670 can comprise a diplexer 680a (e.g., an LTE/cell downlink diplexer), a diplexer 680b (e.g., an LTE/cell uplink diplexer), a triplexer 680c (e.g., a B12/B13 triplexer) , a diplexer 680d (e.g., a high/low uplink diplexer), a diplexer 680e (a high/low downlink diplexer), a quadplexer 680f (e.g., a B25/B66 downlink quadplexer), a quadplexer 680g (e.g., a B25/B66 uplink quadplexer), and a communication integrated circuit 680. Although specific multiplexers have been specified (e.g., diplexers, triplexers, quadplexers), the exact number of input signals for each multiplexer can vary depending on the number of uplink paths and downlink paths.

In one example, the remote antenna unit 670 can comprise one or more first-direction (e.g., uplink) amplification and filtering paths and one or more second-direction (e.g., downlink) amplification and filtering paths.

As illustrated in FIG. 6B, the remote antenna unit 670 can comprise five first-direction amplification and filtering paths, but the number of first-direction amplification and filtering paths can vary to direct a suitable number of frequency ranges, sub-ranges, channels, bands, the like, or a combination thereof. Each first-direction amplification and filtering path can comprise an amplifier 682a, 682b, 682c, 682d, 682e, an attenuator 683a, 683b, 683c, 683d, 683e, a filter 684a, 684b, 684c, 684d, 684e, an amplifier 685a, 685b, 685c, 685d, 685e, an attenuator 686a, 686b, 686c, 686d, 686e, an additional filter 687a, 687b, 687c, 687d, 687e, a detector 688a, 688b, 688c, 688d, 688e, and a power amplifier 689a, 689b, 689c, 689d, 689e. Each of the first-direction amplification and filtering paths can be coupled to a diplexer 691a (e.g., a B5 diplexer), a triplexer 691c (e.g., a B12/B13 triplexer), or a quadplexer 691e (e.g., B25/B66 quadplexer). Although specific multiplexers have been specified (e.g., diplexers, triplexers, quadplexers), the exact number of input signals for each multiplexer can vary depending on the number of uplink paths and downlink paths.

In another example, each second-direction amplification and filtering path can comprise an LNA 692a, 692b, 692c, 692d, a filter 693a, 693b, 693c, 693d, an amplifier 694a, 694b, 694c, 694d, an attenuator 695a, 695b, 695c, 695d, an additional filter 696a, 696b, 696c, 696d, an additional amplifier 697a, 697b, 697c, 697d, an additional attenuator 698a, 698b, 698c, 698d, an additional filter 699a, 699b, 699c, 699d, a detector 681a, 681b, 681c, 681d, the like, or a combination thereof. Each second-direction amplification and filtering path can be coupled to a diplexer, a triplexer, a quadplexer, an n-plexer, the like, or a combination thereof (e.g., 680a, 680b, 680c, 680d, 680e, 680f, 680g).

In another example, the first-direction and second-direction amplification and filtering paths can be configured to be coupled to a diplexer 691a, a triplexer 691c, and a quadplexer 691e. The diplexer 691b (e.g., an LTE/cell diplexer) can be configured to be coupled to the switch 691ab and the switch 691bc. The diplexer 691d (e.g., B25/B66 quadplexer) can be configured to be coupled to the diplexer 691b and the quadplexer 691e.

In another example, the switch 691ab can be configured to be coupled to a donor antenna (e.g., B5 donor antenna), the switch 691be can be configured to be coupled to an additional donor antenna (e.g., B12/B13 donor antenna), and the quadplexer 691d can be configured to be coupled to an additional donor antenna (e.g., a common or B2/B4 donor antenna).

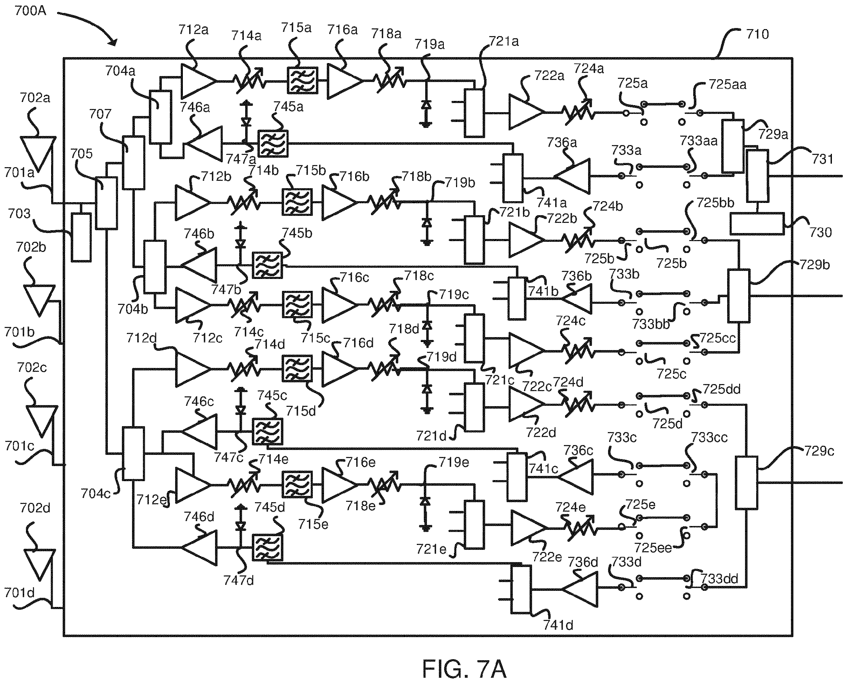

In another example, as illustrated in FIG. 7A, a repeater 710 can include one or more switches 725a, 725b, 725c, 725d, 725e, 733a, 733b, 733c, 733d operable to switch between a fiber optic RF path (e.g., bypass path or attenuated path) or an RF amplification and filtering path (e.g., a standard path). In one example, a bypass path can be configured to direct a first-direction signal (e.g., an uplink signal) for conversion from an RF signal to a fiber optic signal without using a power amplifier. Bypassing power amplification before conversion from an RF signal to a fiber optic signal can reduce the noise figure. In another example, a bypass path can be configured to direct a second-direction signal (e.g., a downlink signal) after conversion from a fiber optic signal to an RF signal for power amplification before being directed to a server antenna port. In another example, a fiber optic path (e.g., a bypass path or an attenuated path) can be configured to direct the fiber optic mode RF signal to a repeater conversion unit.

In one example, the repeater 710 can comprise one or more first direction bypass paths coupled between the first antenna port 701a and the diplexer 729a, triplexer 729b, or quadplexer 729c positioned before conversion from an RF signal to a fiber optic signal. In another example, the repeater 710 can comprise one or more second direction bypass paths coupled between the first antenna port 601a and the diplexer 729a, triplexer 729b, or quadplexer 729c positioned before conversion from an RF signal to a fiber optic signal.

In one example, a repeater 710 can include a first antenna port (e.g., 701a, 701b, 701c, 701d) configured to be coupled to a first antenna (e.g., 702a, 702b, 702c, 702d). The repeater 710 can further comprise one or more connections from each antenna port 701a, 701b, 701c, 701d to a modem 703.

In another example, the repeater 710 can comprise one or more first direction amplification and filtering paths coupled between the first antenna port (e.g., 701a, 701b, 701c, 701d) and the switch 725a, 725b, 725c, 725d, 725e. The one or more first direction amplification and filtering paths can be positioned within the repeater 710, or within an adjacent unit (e.g., 750), or within any combination of the repeater 710, the adjacent unit 750, the remote antenna unit 770, the like, or a combination thereof.

In one example, the one or more first-direction amplification and filtering paths can include five first-direction amplification and filtering paths (e.g., (i) between 704a and 725a, (ii) between 704b and 725b, (iii) between 704b and 725c, (iv) between 704c and 725d, and (v) between 704c and 725e).

In one example, a diplexer 705 (e.g., high/low diplexer) can be coupled to a first antenna port 701a, a diplexer 707 (e.g., LTE/cell diplexer), and a quadplexer 704c (e.g., B25/B66 quadplexer). In one example, the diplexer 707 can be coupled to duplexer 704a (e.g., a B5 duplexer) and a triplexer 704b (e.g., B12/B13 triplexer).

In another example, the one or more first-direction amplification and filtering paths can be coupled to one or more switches operable to switch between a fiber optic RF path (e.g., bypass path or attenuated path) and an RF amplification and filtering path (e.g., a standard path). Diplexer 729a (e.g., LTE/cell uplink diplexer) can be coupled to switch 725aa, diplexer 731 (e.g., high/low uplink diplexer), and switch 733aa. Triplexer 729b (e.g., B12/B13 triplexer) can be coupled to switch 725bb, switch 725cc, and switch 733bb. Quadplexer 729c (e.g., B25/B66 uplink quadplexer) can be coupled to switch 725dd, switch 725ee, switch 733cc, and 733dd.

In another example, a communication integrated circuit 730 can be configured to receive a signal from diplexer 731. The communication signal can send or receive instructions or data between the repeater 710, the repeater conversion unit 750, the remote antenna unit 770, or a combination thereof.

In another example, diplexer 731 can be configured to send or receive a first-direction a fiber optic mode RF signal or second-direction fiber optic mode RF signal via 751a to the repeater conversion unit 750. Triplexer 729b can be configured to send or receive a first direction fiber optic mode RF signal or a second-direction fiber optic mode RF signal to or from the repeater conversion unit 750 via 751b. Quadplexer 729c can be configured to send or receive a first direction fiber optic mode RF signal or a second-direction fiber optic mode RF signal to or from the repeater conversion unit 750 via 751c.

In one example, the first-direction amplification and filtering path can include one or more of an LNA (e.g., 712a, 712b, 712c, 712d, 712e), an attenuator (714a, 714b, 714c, 714d, 714e), a filter (715a, 715b, 715c, 715d, 715e), an amplifier (716a, 716b, 716c, 716d, 716e), an attenuator (718a, 718b, 718c, 718d, 718e), a detector (719a, 719b, 719c, 719d, 719e), the like, or a combination thereof.

In another example, each first direction amplification and filtering path can comprise a splitter 721a, 721b, 721c, 721d, 721e (e.g., a 4-way splitter). The splitters 721a, 721b, 721c, 721d, 721e can be coupled to one or more paths (e.g., 5 paths as shown). Each of the splitters 721a, 721b, 721c, 721d, 721e can be further coupled to an amplifier 722a, 722b, 722c, 722d, 722e, an attenuator 724a, 724b, 724c, 724d, 724e, and a switch 725a, 725b, 725c, 725d, 725e.

In one example, the repeater 710 can comprise one or more second-direction amplification and filtering paths coupled between the first antenna port (701a, 701b, 701c, 701d) and the switches 733a, 733b, 733c. 733d The one or more second-direction amplification and filtering paths can be positioned within the repeater 710, or within a repeater conversion unit (e.g., 750), or within any combination of the repeater 710, the repeater conversion unit 750, the remote antenna unit 770, the like, or a combination thereof.

In one example the second-direction amplification and filtering path can include one or more of an amplifier (736a, 736b, 736c, 736d), a splitter 741a, 741b, 741c, 741d (e.g., a 4-way splitter), a filter (745a, 745b, 745c, 745d), a detector (747a, 747b, 747c, 747d), a second-direction PA 746a, 746b, 746c, 746d, the like, or a combination thereof.

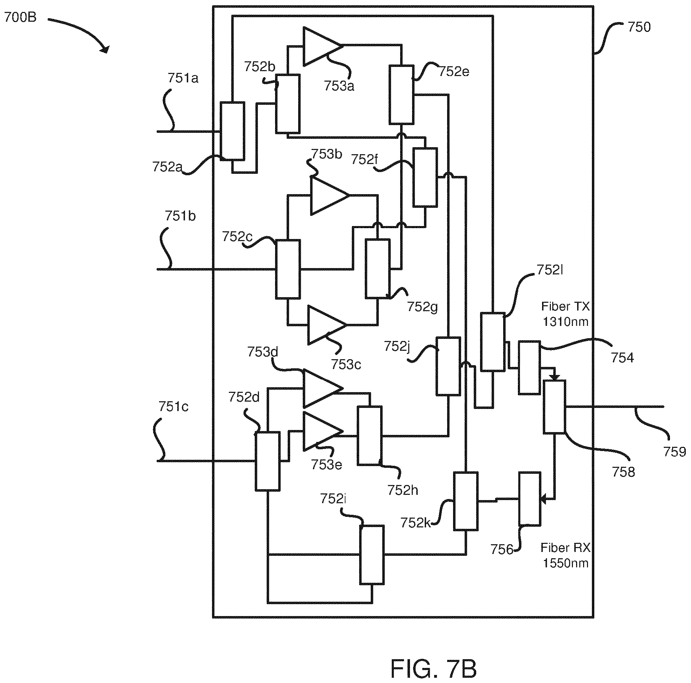

In another example, as illustrated in FIG. 7B, a repeater conversion unit 750 can comprise a connection 751a, 751b, 751c (e.g., a coaxial or direct connection) that can be configured to send or receive a fiber optic mode RF signal via a connection from the repeater 710 via the diplexer 731, the triplexer 729b, or the quadplexer 729c.

The connections (e.g., 751a, 751b, 751c) between the repeater and the repeater conversion unit can carry any suitable number of first-direction (e.g., uplink) fiber optic mode RF signals having various frequency ranges, sub-ranges, channels, bands, the like, or a combination thereof.

In one example, the connection 751a can be configured to direct a fiber optic mode RF signal from diplexer 731 (e.g., a B5 uplink signal) to diplexer 752a in the repeater conversion unit. Diplexer 752a can be a high/low diplexer configured to direct the fiber optic mode RF signal to diplexer 752l (e.g., a high/low diplexer at a center frequency of about 2180 MHz). The fiber optic mode RF signal can also be directed from diplexer 752a to a duplexer 752b (e.g., a B5 duplexer). The duplexer 752b can direct a B5 uplink signal to the amplifier 753a and the diplexer 752e (e.g., an LTE/Cell uplink diplexer). The diplexer 752e can direct the B5 uplink signal to the diplexer 752j (e.g., a high/low uplink diplexer). Diplexer 752j can direct the B5 uplink signal to the diplexer 752l. The fiber optic mode RF signal can be further directed from the diplexer 752l to a wavelength division multiplexer 758 via the RF over fiber TX unit 754.

In another example, the connection 751b can be configured to direct a fiber optic mode RF signal (e.g., a B12/B13 uplink signal) from the triplexer 729 (e.g., a B12/13 triplexer) in the repeater to the triplexer 752c (e.g., a B12/13 triplexer) in the repeater conversion unit. From the triplexer 752c, the B12 uplink signal and the B13 uplink signal can be amplified in 753b, 753c and directed to the triplexer 752g. The triplexer 752g can further direct the B12/B13 uplink signal to the diplexer 752e to be further directed to the diplexer 752j, diplexer 752l, the RF over fiber TX unit 754, and the wavelength division multiplexer 758.

The connection 751c can be configured to direct a fiber optic mode RF signal (e.g., a B25/B66 uplink RF signal) from diplexer 729c to diplexer 752d (e.g., a B25/B66 quadplexer). Diplexer 752d can direct one or more uplink signals for amplification using 753d and 753e. The resulting uplink fiber optic mode RF signals can be directed to the quadplexer 752h (e.g., a B25/B66 uplink quadplexer), to the diplexer 752j, to the diplexer 752l, the RF over fiber TX unit 754, and the wavelength division multiplexer 758.

Consequently, the wavelength division multiplexer 758 can multiplex (or demultiplex) the different optical carrier signals onto (or from) a single optical fiber by using different wavelengths. The fiber optic signal can be sent from the wavelength division multiplexer 758 via a fiber optic connection 759 to the wavelength division multiplexer 771 in the remote antenna unit 770.

The connections (e.g., 751a, 751b, 751c) between the repeater and the repeater conversion unit can carry any suitable number of second-direction (e.g., downlink) signals having various frequency ranges, sub-ranges, channels, bands, the like, or a combination thereof.

In one example, the wavelength division multiplexer 758 can receive a fiber optic signal from the wavelength division multiplexer 771 in the remote antenna unit 770 via the fiber optic connection 759. The fiber optic signal can be directed to an RF over fiber RX unit 756 for direction to the diplexer 752k (e.g., a high/low downlink diplexer).

In one example, the diplexer 752k can direct a second-direction fiber optic mode RF signal to a second-direction diplexer 752f (e.g., an LTE/cell downlink diplexer). From the diplexer 752f, the second-direction fiber optic mode RF signal (e.g., DL B5) can be directed to the duplexer 752b. The duplexer 752b can further direct the second-direction fiber optic mode RF signal to the diplexer 752a in the repeater conversion unit, and, via the 751a connection, to the diplexer 731 in the repeater.

In another example, the diplexer 752k can direct the second-direction fiber optic mode RF signal to the second direction diplexer 752f for further direction to the triplexer 752c (e.g., a B12/B13 triplexer). The second-direction fiber optic mode RF signal (e.g., a B12/B13 downlink signal) from the triplexer 752c in the repeater conversion unit can be directed via the connection 751b to the triplexer 729b in the repeater.

In another example, the diplexer 752k can direct the second-direction fiber optic mode RF signal to the second-direction quadplexer 752i (e.g., B25/B66 downlink quadplexer). The second-direction fiber optic mode RF signal can be further directed, via connection 751c to the quadplexer 752d (e.g., a B25/B66 quadplexer) in the repeater conversion unit 750 and to the quadplexer 729c in the repeater 710.

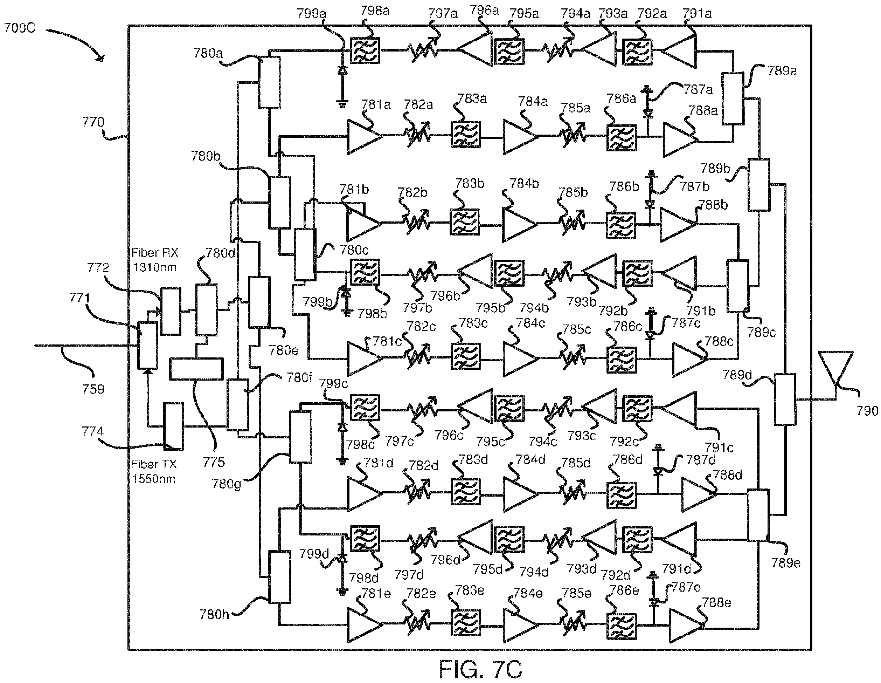

In another example, as illustrated in FIGS. 7B and 7C, the fiber conversion unit 750 can be coupled via a fiber optic connection 759 to a remote antenna unit 770 at a wavelength division multiplexer 771. The wavelength division multiplexer 771 can be coupled to an RF over fiber RX unit 772 and an RF over fiber TX unit 774.

In one example, the remote antenna unit 770 can comprise a diplexer 780a (e.g., an LTE/cell downlink diplexer), a diplexer 780b (e.g., an LTE/cell uplink diplexer), a triplexer 780c (e.g., a B12/B13 triplexer) , a diplexer 780d (e.g., a high/low uplink diplexer), a diplexer 780e (a high/low downlink diplexer), a quadplexer 780f (e.g., a B25/B66 downlink quadplexer), a quadplexer 780g (e.g., a B25/B66 uplink quadplexer), and a communication integrated circuit 775.

As illustrated in FIG. 7C, each first-direction amplification and filtering path can comprise an amplifier 781a, 781b, 781c, 781d, 781e, an attenuator 782a, 782b, 782c, 782d, 782e, a filter 783a, 783b, 783c, 783d, 783e, an amplifier 784a, 784b, 784c, 784d, 784e, an attenuator 785a, 785b, 785c, 785d, 785e, an additional filter 786a, 786b, 786c, 786d, 786e, a detector 787a, 787b, 787c, 787d, 787e, and a power amplifier 788a, 788b, 788c, 788d, 788e. Each of the first-direction amplification and filtering paths can be coupled to a diplexer 789a (e.g., a B5 diplexer), a triplexer 789c (e.g., a B12/B13 triplexer), or a quadplexer 789e (e.g., B25/B66 quadplexer).

In another example, each second-direction amplification and filtering path can comprise an LNA 791a, 791b, 791c, 791d, a filter 792a, 792b, 792c, 792d, an amplifier 793a, 793b, 793c, 793d, an attenuator 785a, 785b, 785c, 795d, an additional filter 796a, 796b, 796c, 796d, an additional attenuator 797a, 797b, 797c, 797d, an additional filter 798a, 798b, 798c, 798d, a detector 799a, 799b, 799c, 799d, the like, or a combination thereof. Each second-direction amplification and filtering path can be coupled to a diplexer, a triplexer, a quadplexer, an n-plexer, the like, or a combination thereof (e.g., 780a, 780b, 780c, 780d, 780e, 780f, 780g).

In another example, the first-direction and second-direction amplification and filtering paths can be configured to be coupled to a diplexer 789a, a triplexer 789c, and a quadplexer 789e. The diplexer 789b (e.g., an LTE/cell diplexer) can be configured to be coupled to the diplexer 789d. The diplexer 789d can be configured to be coupled to the diplexer 789b and the quadplexer 789e. In another example, the diplexer 789d can be configured to be coupled to a donor antenna (e.g., B5 donor antenna).

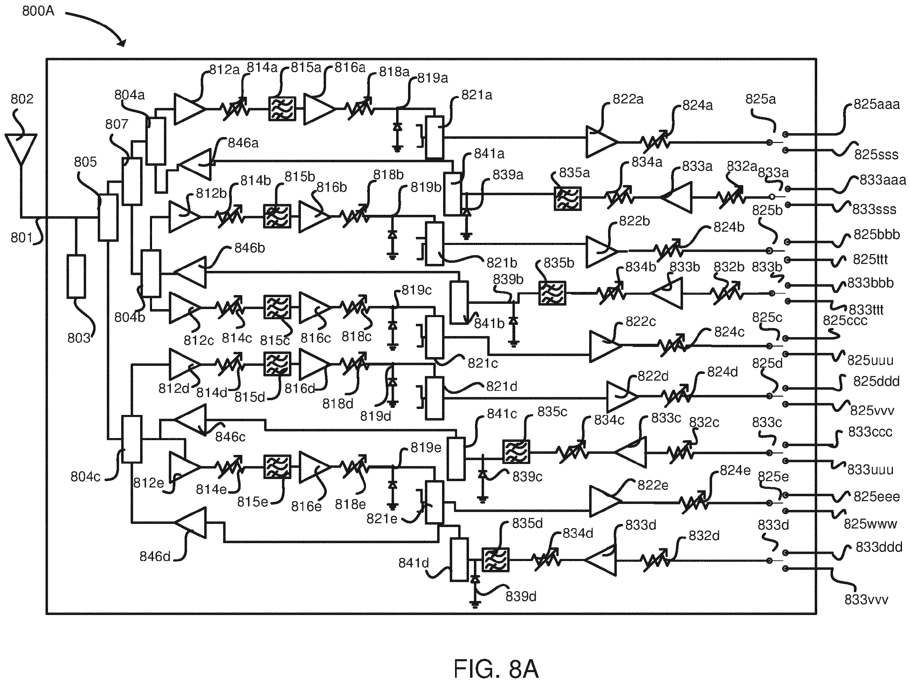

In another example, as illustrated in FIG. 8A, a repeater 800A can include one or more switches 825aaa, 825bbb, 825ccc, 825ddd, 825eee, 833aaa, 833bbb, 833ccc, 833ddd operable to switch between a fiber optic RF path (e.g., bypass path or attenuated path) or an RF amplification and filtering path (e.g., a standard path). In one example, a bypass path can be configured to direct a first-direction fiber optic mode RF signal (e.g., an uplink signal) for conversion from an RF signal to a fiber optic signal without using a power amplifier. Bypassing power amplification before conversion from an RF signal to a fiber optic signal can reduce the noise figure. In another example, a bypass path can be configured to direct a second-direction fiber optic mode RF signal (e.g., a downlink signal) after conversion from a fiber optic signal to an RF signal for power amplification before being directed to a server antenna port. In another example, a fiber optic path (e.g., a bypass path or an attenuated path) can be configured to direct the fiber optic mode RF signal to a repeater conversion unit 850.

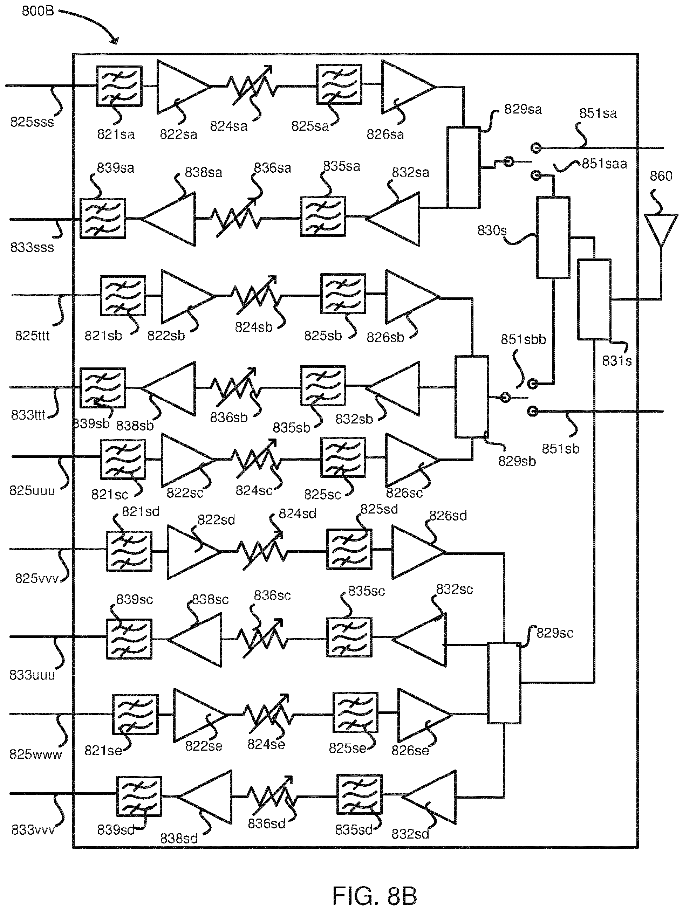

In one example, the repeater 800A can comprise one or more first direction fiber optic RF path (e.g., bypass path or attenuated path) coupled between the first antenna port 801 and the second antenna port 861 (in FIG. 8B). The second antenna port 861 can be coupled to a second antenna. In another example, the repeater 800A can comprise one or more first direction bypass paths coupled between the first antenna port 801 and the switches 851a and 851b positioned before conversion from an RF signal to a fiber optic signal. In another example, the repeater can comprise one or more second direction bypass paths coupled between the first antenna port 801 and a second antenna port. In another example, the repeater can comprise one or more second direction bypass paths coupled between the first antenna port 801 and the switches 851a and 851b.

In another example, the repeater 800A, 800B can be configured to send the first-direction RF mode RF signal to the second antenna port (e.g., a donor antenna port 861) at a first power level or using a first gain, and send the first-direction fiber optic mode RF signal to the fiber-optic RF path (e.g., 825aaa, 825bbb, 825ccc, 825ccc, 825ddd, 825eee) at a second power level or using a second gain. In one example, the second power level or second gain in the fiber optic mode can be less than the first power level or first gain in the RF mode. Using a lower power level or lower gain for the fiber optic mode can reduce the amount of noise in the fiber optic mode RF signal as the fiber optic mode RF signal is converted to a fiber optic signal for transmission from the repeater 800A, 800B to a remote antenna unit and converted back to an RF signal for transmission from the remote antenna unit to a wireless access point.

In one example, the first and second power levels can be any power levels suitable to minimize the amount of noise in the RF signal and/or fiber optic signal. In one example, the uplink power for the first power level may not exceed 1 watt composite conducted power and equivalent isotropic radiated power (EIRP) for each band of operation. In another example, the downlink power for the first power level may not exceed 0.05 watt (17 dBm) composite and 10 dBm per channel conducted and EIRP for each band of operation (using RMS equivalent voltage).

In another example, the second power level or second gain can be selected to be reduced from the first power level or first gain so that the sum of the second power level or second gain does not exceed a desired noise figure (e.g., a noise figure arising from the first power level or first gain). In one example, the noise figure for the second power level or second gain and the noise figure for the first power level or first gain can be about the same value.

In another example, the first and second gains can be any gains suitable to minimize the amount of noise in the RF signal and/or fiber optic signal. In another example, the first and second gains can be any gains that comply with FCC regulations as disclosed herein. In one example, the first gain can be less than one or more of 70 dB, 65 dB, 60 dB, 55 dB, 50 dB, the like, or a combination thereof. In another example, the second gain can be less than about one or more of 40 dB, 35 dB, 30 dB, 25 dB, 20 dB, the like, or a combination thereof. In another example, the second gain can be less than the first gain by one or more of: 50 dB, 45 dB, 40 dB, 35 dB, 30 dB, 25 dB, 20 dB, 15 dB, 10 dB, 5 dB, 3 dB, 1 dB, the like, or a combination thereof. In one example, the noise figure for the second gain can be less than the noise figure for the first gain. In another example, the noise figure for the second gain can about the same as the noise figure for the first gain.

The positioning of an LNA or a PA with respect to the amplification and filtering paths present in the repeater 800A, the repeater conversion unit 850, the remote antenna unit (e.g., 770), or a combination thereof can be selected to reduce the noise figure. In one example, the positioning of an LNA can be selected to filter and amplify a first-direction fiber optic mode RF signal on the first direction fiber optic RF path using a low noise amplifier (LNA) before the first-direction fiber optic mode RF signal is converted from an RF signal to a fiber optic signal. In another example, the positioning of the PA can be selected to filter and amplify a second-direction fiber optic mode RF signal on the second direction fiber optic RF path using a power amplifier (PA) after the second-direction signal is converted from a fiber optic signal to an RF signal.

In one example, a repeater 800A can include a first antenna port 801 configured to be coupled to a first antenna 802. The first antenna 802 can be configured to receive uplink signals from a user equipment and transmit uplink signals to the first antenna port 801. The first antenna 802 can be configured to receive downlink signals from the first antenna port 801 and transmit downlink signals to the user equipment. The repeater can further comprise one or more connections from each antenna port 801 to a modem 803.

In another example, the repeater 800A can comprise one or more first direction amplification and filtering paths coupled between the first antenna port 801 and the switch 825aaa, 825bbb, 825ccc, 825ddd, 825eee. The one or more first direction amplification and filtering paths can be positioned within the repeater 810, or within an adjacent unit (e.g., a repeater conversion unit 850), or within any combination of the repeater 810, the adjacent unit 850, the remote antenna unit, the like, or a combination thereof.

In one example, the one or more first-direction amplification and filtering paths can include any number of first-direction amplification and filtering paths that can amplify and filter the desired number of frequency ranges, sub-ranges, channels, bands, the like, or a combination thereof. As illustrated in FIG. 8A, the one or more first-direction amplification and filtering paths can include five first-direction amplification and filtering paths (e.g., (i) between 804a and 825aaa, (ii) between 804b and 825bbb, (iii) between 804b and 825ccc, (iv) between 804c and 825ddd, and (v) between 804c and 825eee.

In another example, the repeater 800A can comprise one or more diplexers, triplexers, quadplexers, multiplexers, or the like that can be configured to be coupled to the one or more first direction amplification and filtering paths and/or the one or more second direction amplification and filtering paths. In one example, a diplexer 805 (e.g., high/low diplexer) can be coupled to a first antenna port 801, a diplexer 807 (e.g., LTE/cell diplexer), and a quadplexer 804c (e.g., B25/B66 quadplexer). In one example, the diplexer 807 can be coupled to duplexer 804a (e.g., a B5 duplexer) and a triplexer 804b (e.g., B12/B13 triplexer).

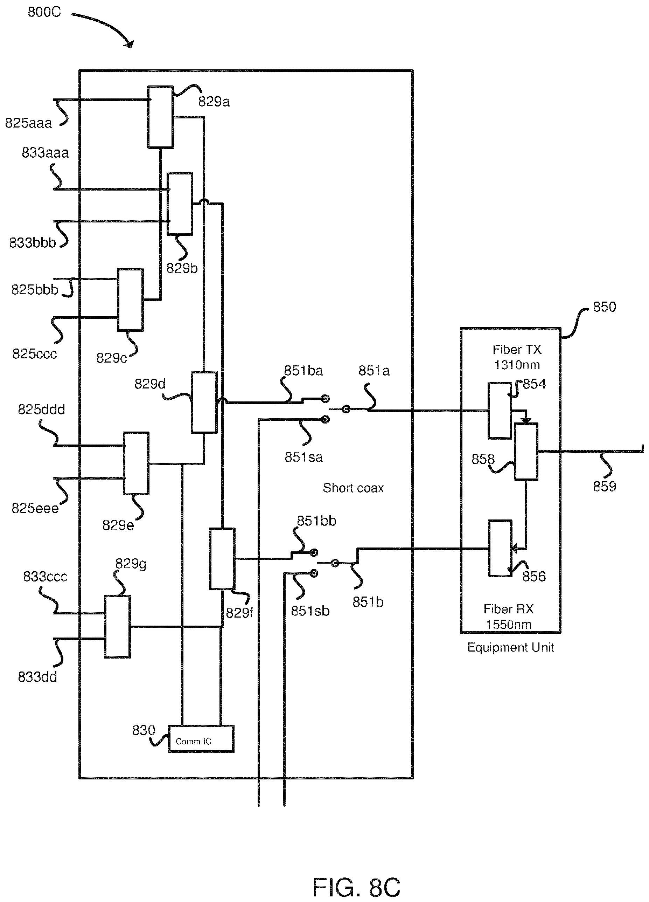

In another example, the one or more first-direction amplification and filtering paths can be coupled to one or more switches operable to switch between a fiber optic RF path (e.g., bypass path or attenuated path) and an RF amplification and filtering path (e.g., a standard path). As illustrated in FIG. 8C, diplexer 829a (e.g., LTE/cell uplink diplexer) can be coupled to switch 825aaa, diplexer 829d (e.g., high/low uplink diplexer), and triplexer 829c. Triplexer 829c (e.g., B12/B13 triplexer) can be coupled to switch 825bbb, switch 825ccc, and diplexer 829a. Quadplexer 829e (e.g., B25/B66 uplink quadplexer) can be coupled to switch 825ddd, switch 825eee, and diplexer 829d (e.g., high/low uplink diplexer). Quadplexer 829g (e.g., B25/B66 downlink quadplexer) can be coupled to switch 833ccc, switch 833ddd, and diplexer 829f (e.g., high/low downlink diplexer).

In another example, diplexer 829f (e.g., high/low downlink diplexer) can be coupled to diplexer 829b (e.g., LTE/cell downlink diplexer) and quadplexer 829g. Diplexer 829d can be further coupled to switch 851ba. Diplexer 829f (e.g., high/low downlink diplexer) can be further coupled to switch 851bbb.

In another example, a communication integrated circuit 830 can be configured to receive a signal from diplexer 829f and transmit a signal to quadplexer 829e and diplexer 829d. The communication signal can send or receive instructions or data to or from the repeater 800A, the repeater conversion unit 850, the remote antenna unit (e.g., 770), or a combination thereof. The communication circuit 830 can be configured to transmit an RF signal comprising instructions or data that has been modulated onto a 2.4 GHz carrier signal between a repeater conversion unit 850 and a remote antenna unit (e.g., 770) to prevent harmonic interference between the RF signal and the fiber optic signal.

In another example, switch 851ba can be configured to direct a first-direction fiber optic mode RF signal via 851a to the repeater conversion unit 850. Switch 851bb can be configured to receive a second-direction fiber optic mode RF signal from the repeater conversion unit 850 via 851b.

In another example, a first-direction amplification and filtering path can include any suitable number of low-noise amplifiers (LNAs), attenuators, filters, power amplifiers, detectors, the like, or combinations thereof to amplify and filter the desired frequency range, sub-range, channel, band, the like, or a combination thereof. In one example, a first-direction can be an uplink direction and the first-direction amplification and filtering path can include one or more of an LNA (e.g., 812a, 812b, 812c, 812d, 812e), an attenuator (814a, 814b, 814c, 814d, 814e), a filter (815a, 815b, 815c, 815d, 815e), an amplifier (816a, 816b, 816c, 816d, 816e), an attenuator (818a, 818b, 818c, 818d, 818e), a detector (819a, 819b, 819c, 819d, 819e), the like, or a combination thereof.

In another example, each first direction amplification and filtering path can comprise a splitter 821a, 821b, 821c, 821d, 821e (e.g., a 4-way splitter). The splitters 821a, 821b, 821c, 821d, 821e can be coupled to one or more paths (e.g., 5 paths as shown). Each of the splitters 821a, 821b, 821c, 821d, 821e can be further coupled to an amplifier 822a, 822b, 822c, 822d, 822e, an attenuator 824a, 824b, 824c, 824d, 824e, and a switch 825aaa, 825bbb, 825ccc, 825ddd, 825eee.

In one example, the repeater 800A can comprise one or more second-direction amplification and filtering paths coupled between the first antenna port 801 and the switches 851a and 851b. The one or more second-direction amplification and filtering paths can be positioned within the repeater 810, or within a repeater conversion unit (e.g., 850), or within any combination of the repeater 810, the repeater conversion unit 850, the remote antenna unit (e.g., 770), the like, or a combination thereof.

In one example, the one or more second-direction amplification and filtering paths can include any number of second-direction amplification and filtering paths that can amplify and filter the desired number of frequency ranges, sub-ranges, channels, bands, the like, or a combination thereof. As illustrated in FIG. 8A, the one or more second-direction amplification and filtering paths can include four second-direction amplification and filtering paths.

In another example, a second-direction amplification and filtering path can include any suitable number of low-noise amplifiers (LNAs), attenuators, filters, power amplifiers, detectors, the like, or combinations thereof to amplify and filter the desired frequency range, sub-range, channel, band, the like, or a combination thereof. In one example, a second direction can be a downlink direction and the second-direction amplification and filtering path can include one or more of an attenuator (832a, 832b, 832c, 832d), an amplifier (833a, 833b, 833c, 833d), an attenuator (834a, 834b, 834c, 834d), a filter 835a, 835b, 835c, 835d, a detector 839a, 839b, 839c, 839d, a splitter 841a, 841b, 841c, 841d (e.g., a 4-way splitter), a second-direction PA 846a, 846b, 846c, 846d, the like, or a combination thereof.

In one example, as illustrated in FIG. 8B, the one or more first-direction or second-direction amplification and filtering paths can comprise one or more standard amplification and filtering paths. In this example, there can be 5 standard first-direction (e.g., uplink) amplification and filtering paths and 4 standard second-direction (e.g., downlink) amplification and filtering paths.

The standard first-direction amplification and filtering paths can each be coupled to a switch 825a, 825b, 825c, 825d, 825e in the repeater via a connection 825sss, 825ttt, 825uuu, 825vvv, 825www. Each standard first-direction amplification and filtering paths can include one or more of: a filter 821sa, 821sb, 821sc, 821sd, 821se, an amplifier 822sa, 822sb, 822sc, 822sd, 822se, an attenuator 824sa, 824sb, 824sc, 824sd, 824se, a filter 825sa, 825sb, 825sc, 825sd, 825se, an additional amplifier 826sa, 826sb, 826sc, 826sd, 826se, the like, or combinations thereof.

The standard first-direction amplification and filtering paths can each be coupled to a switch 851saa, 851sbb via a duplexer 829sa (e.g., a B5 duplexer), a triplexer 829sb (e.g., a B12/B13 triplexer), a quadplexer 829sc (e.g., a B25/B66 quadplexer). Switch 851saa can be coupled to the duplexer 829sa and the diplexer 830s (e.g., LTE/cell diplexer), and can be configured to be coupled to switch 851sa. Switch 851sbb can be coupled to triplexer 829sb, diplexer 830s, and can be configured to be coupled to switch 851sbb. The quadplexer 829sc can be coupled to the diplexer 831s (e.g., a high/low diplexer), which can be coupled to a second antenna 860 (e.g., a donor antenna).

The standard second-direction amplification and filtering paths can each be coupled to a switch 833a, 833b, 833c, 833d in the repeater via a connection 833sss, 833ttt, 833uuu, 833vvv. Each standard second-direction amplification and filtering path can include one or more of: a filter 839sa, 839sb, 839sc, 839sd, an amplifier 838sa, 838sb, 838sc, 838sd, an attenuator 836sa, 836sb, 836sc, 836sd, a filter 835sa, 835sb, 835sc, 835sd, an additional amplifier 832sa, 832sb, 832sc, 832sd, the like, or combinations thereof.

The standard second-direction amplification and filtering paths can each be coupled to a switch 851saa, 851sbb via a duplexer 829sa (e.g., a B5 duplexer), a triplexer 829sb (e.g., a B12/B13 triplexer), and a quadplexer 829sc (e.g., a B25/B66 quadplexer).

When the standard first-direction amplification and filtering paths are not used (e.g., when the first-direction signals are directed to 825aaa, 825bbb, 825ccc, 825ddd, 825eee), the first-direction amplification and filtering paths can use bypass paths. In another example, a fiber optic path (e.g., a bypass path or an attenuated path) can be configured to direct the signal to a repeater conversion unit.

In one example, a first-direction fiber optic mode RF signal directed from the connection 825aaa can be directed to the diplexer 829a (LTE/cell uplink diplexer), to the diplexer 829d (e.g., a high/low uplink diplexer), to the switch 851ba, and to the repeater conversion unit 850 via the connection 851a.

In another example, a first-direction fiber optic mode RF signal directed from the connection 825bbb can be directed to the diplexer 829c (B12/B13 uplink diplexer), to the diplexer 829a, to the diplexer 829d (e.g., a high/low uplink diplexer), to the switch 851ba, and to the repeater conversion unit 850 via the connection 851a.

In another example, a first-direction fiber optic mode RF signal directed from the connection 825ccc can be directed to the diplexer 829c (B12/B13 uplink diplexer), to the diplexer 829a, to the diplexer 829d, to the switch 851ba, and to the repeater conversion unit 850 via the connection 851a.

In another example, a first-direction fiber optic mode RF signal directed from the connection 825ddd can be directed to the quadplexer 829e (e.g., a B25/B66 quadplexer), to the diplexer 829d, to the switch 851ba, and to the repeater conversion unit 850 via the connection 851a.

In another example, a first-direction fiber optic mode RF signal directed from the connection 825eee can be directed to the quadplexer 829e (e.g., a B25/B66 quadplexer), to the diplexer 829d, to the switch 851sa, and to the repeater conversion unit 850 via the connection 851a.

When the standard second-direction amplification and filtering paths are not used (e.g., when the second-direction signals are directed to 833aaa, 833bbb, 833ccc, 833ddd), the second-direction amplification and filtering paths can comprise bypass paths.

In one example, a second-direction fiber optic mode RF signal directed from the connection 833aaa can be directed from the diplexer 829b (e.g., an LTE/cell downlink diplexer), from the diplexer 829f (e.g., a high/low downlink diplexer), from the switch 851 bb, and from the repeater conversion unit 850 via the connection 851b.

In another example, a second-direction fiber optic mode RF signal directed from the connection 833bb can be directed from the diplexer 829b (e.g., an LTE/cell downlink diplexer), from the diplexer 829f (e.g., a high/low downlink diplexer), from the switch 851bb, and from the repeater conversion unit 850 via the connection 851b.

In another example, a second-direction fiber optic mode RF signal directed from the connection 833ccc can be directed from the quadplexer 829g (e.g., a B26/B66 downlink quadplexer), from the diplexer 829f (e.g., a high/low downlink diplexer), from the switch 851bb, and from the repeater conversion unit 850 via the connection 851b.

In another example, a second-direction fiber optic mode RF signal directed from the connection 833ddd can be directed from the quadplexer 829g (e.g., a B26/B66 downlink quadplexer), from the diplexer 829f (e.g., a high/low downlink diplexer), from the switch 851bb, and from the repeater conversion unit 850 via the connection 851b.

In one example, the first-direction fiber optic mode RF signal carried on 851a can be directed to the repeater conversion unit 850, to RF over fiber TX unit 854, and to the wavelength division multiplexer 858, and via 859 to a remote antenna unit.

In another example, the second-direction fiber optic mode RF signal carried on 851b can be directed from the repeater conversion unit 850, from RF over fiber RX unit 856, and from the wavelength division multiplexer 858, and via connection 859 from a remote antenna unit.

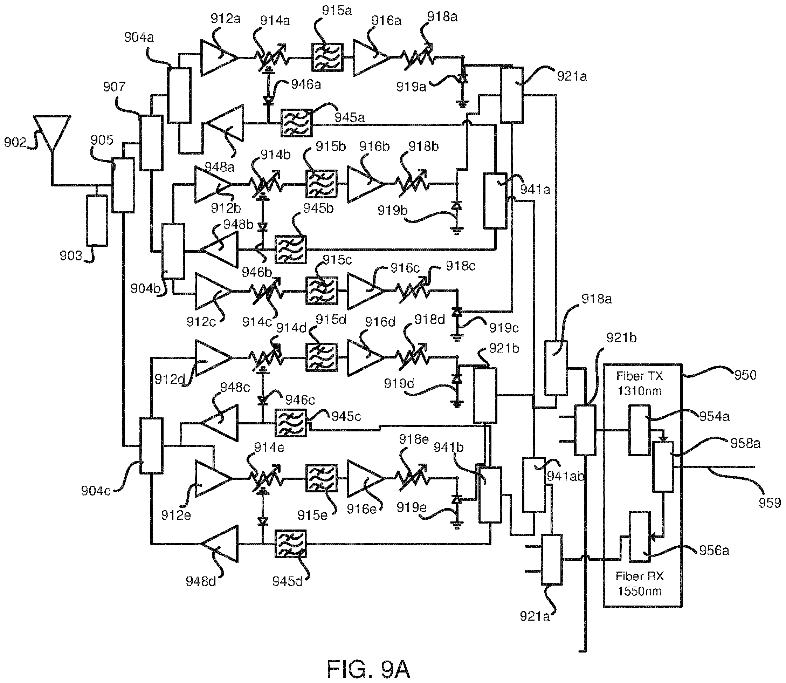

In one example, as illustrated in FIG. 9A, a repeater can include a first antenna port (e.g., 901) configured to be coupled to a first antenna 902. The first antenna 902 can be configured to receive uplink signals from a user equipment and transmit uplink signals to the first antenna port 901. The first antenna 902 can be configured to receive downlink signals from the first antenna port 901 and transmit downlink signals to the user equipment. The repeater can further be coupled from the antenna port 901 to a modem 903. The repeater can comprise a diplexer 905 (e.g., a high/low diplexer), a diplexer 907 (e.g., an LTE/cell diplexer), a duplexer 904a (e.g., a B5 duplexer), a triplexer 904b (e.g., a B12/B13 triplexer), and a quadplexer 904c (e.g., a B25/B66 quadplexer).

In another example, a first-direction amplification and filtering path can include any suitable number of low-noise amplifiers (LNAs), attenuators, filters, power amplifiers, detectors, the like, or combinations thereof to amplify and filter the desired frequency range, sub-range, channel, band, the like, or a combination thereof. In one example, a first-direction can be an uplink direction and the first-direction amplification and filtering path can include one or more of an LNA (e.g., 912a, 912b, 912c, 912d, 912e) an attenuator (914a, 914b, 914c, 914d, 914e), a filter (915a, 915b, 915c, 915d, 915e), an amplifier (916a, 916b, 916c, 916d, 916e), an attenuator (918a, 918b, 918c, 918d, 918e), a detector (919a, 919b, 919c, 919d, 919e), the like, or a combination thereof.

In another example, each first direction amplification and filtering path can comprise a splitter 921a, 921b. The splitter 921a can be coupled to one or more paths (e.g., 3 paths as shown). The splitter 921a can be further coupled to a diplexer 918a (e.g., a high/low uplink diplexer). In one example, the diplexer 918a can be coupled to a splitter 921b (e.g., a 4-way uplink splitter), which can be coupled to the fiber conversion unit 950.

In another example, the splitter 921b can be coupled to one or more paths (e.g., 2 paths as shown). The splitter 921b can be further coupled to a diplexer 918a, a splitter 921b, and a fiber conversion unit 950.

In one example, the repeater can comprise one or more second-direction amplification and filtering paths coupled. The second-direction amplification and filtering paths can include any suitable number of low-noise amplifiers (LNAs), attenuators, filters, power amplifiers, detectors, the like, or combinations thereof to amplify and filter the desired frequency range, sub-range, channel, band, the like, or a combination thereof. In one example, a second direction can be a downlink direction and the second-direction amplification and filtering path can include one or more of a filter (945a, 945b, 945c, 945d), and a downlink power amplifier (948a, 948b, 948c, 948d), the like, or a combination thereof.

In another example, each second direction amplification and filtering path can comprise a splitter 941a, 941b. The splitter 941a can be coupled to one or more paths (e.g., 2 paths as shown). The splitter 941a can be further coupled to a diplexer 941ab (e.g., a high/low downlink diplexer), and a splitter 921a (e.g., a 4-way downlink splitter). The splitter 941b can be coupled to one or more paths (e.g., 2 paths as shown). The splitter 941b can be further coupled to a diplexer 941ab (e.g., a high/low downlink diplexer), and a splitter 921a (e.g., a 4-way downlink splitter).

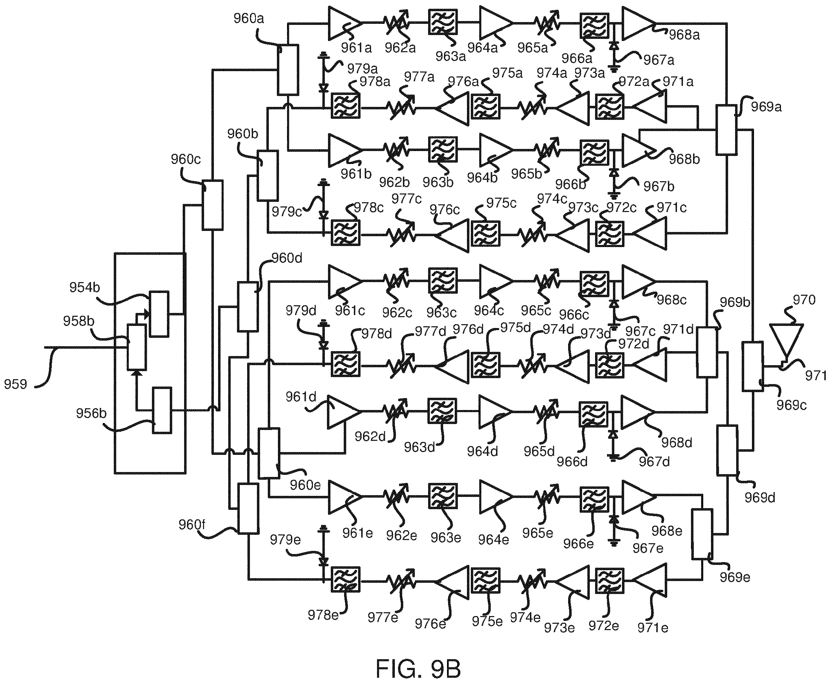

In another example, the repeater 900 can be configured to be coupled to a repeater conversion unit 950. The repeater conversion unit 950 can comprise an RF over fiber TX unit 954a and an RF over fiber RX unit 956a. The repeater conversion unit 950 can comprise a wavelength division multiplexer 958a. The repeater conversion unit 950 can be coupled via 959 to a remote antenna unit (illustrated in FIG. 9B).

In another example, as illustrated in FIG. 9B, the wavelength division multiplexer 958a can be coupled via a fiber optic connection 959 to a remote antenna unit 570 at a wavelength division multiplexer 958b. The wavelength division multiplexer 958b can be coupled to a RF over fiber RX unit 954b and a RF over fiber TX unit 956b.

In one example, the remote antenna unit can comprise one or more first-direction (e.g., uplink) amplification and filtering paths and one or more second-direction (e.g., downlink) amplification and filtering paths. The first-direction amplification and filtering paths can each comprise an amplifier 961a, an attenuator 962a, a filter 963a, an additional amplifier 964a, an attenuator 965a, a filter 966a, a detector 967a, and a power amplifier 968a. The second-direction amplification and filtering path can comprise an LNA 971a, 971b, 971c, 971d, 971e, a filter 972a, 972b, 972c, 972d, 972e, an amplifier 973a, 973b, 973c, 973d, 973e, an attenuator 974a, 974b, 974c, 974d, 975e, a filter 975a, 975b, 975c, 975d, 975e, an amplifier 976a, 976b, 976c, 976d, 976e, an attenuator 977a, 977b, 977c, 977d, 977e, a filter 978a, 978b, 978c, 978d, 978e, and a detector 979a, 979b, 979c, 979d, 979e, the like, or a combination thereof.

In another example, the remote antenna unit can comprise a splitter 960a (e.g., a 2-way uplink splitter), a splitter 960b (e.g., a 2-way downlink splitter), a diplexer 960c (e.g., a high/low uplink diplexer), a diplexer 960d (e.g., a high/low downlink diplexer), a splitter 960e (e.g., a 3-way uplink splitter), and a splitter 960f (e.g., a 2-way downlink splitter).

In another example, the remote antenna unit 970 can comprise a quadplexer 969a (e.g., a B25/B66 quadplexer), a triplexer 969b (e.g., a B12/B13 triplexer), a duplexer 969e (e.g., a B5 duplexer), a diplexer 969d (e.g., an LTE/cell diplexer), and a diplexer 969c (e.g., a high/low diplexer). The diplexer 969c can be coupled to the second antenna port (e.g., a donor port) 971 and the second antenna (e.g., the donor antenna) 970.

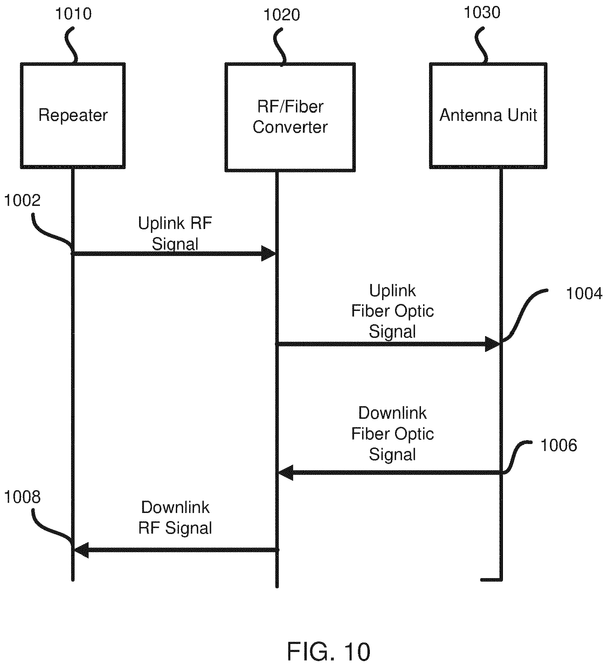

In another example, as depicted in FIG. 10, a repeater 1010 can be configured to receive an uplink RF signal from a UE and transmit the uplink RF signal (e.g., a fiber optic mode RF signal) to an RF/Fiber converter 1020, as shown in operation 1002. The RF/Fiber converter 1020 can be configured to convert the uplink fiber optic mode RF signal to an uplink fiber optic signal without conversion of the RF signal to the digital domain. The RF/Fiber Converter 1020 can be configured to transmit the uplink fiber optic signal to the antenna unit 1030, as shown in operation 1004. The antenna unit 1030 can be configured to convert the uplink fiber optic signal to an uplink RF signal and communicate the uplink RF signal to a base station.

In another example, the antenna unit 1030 can be configured to receive a downlink RF signal from a base station and convert the downlink RF signal to a downlink fiber optic signal. The antenna unit 1030 can be further configured to transmit the downlink fiber optic signal to an RF/Fiber converter 1020, as shown in operation 1006. The RF/Fiber Converter 1020 can be configured to convert the downlink fiber optic signal to a downlink RF signal. The downlink RF signal (e.g., a fiber optic mode RF signal) can be transmitted from the RF/Fiber Converter 1020 to the repeater 1010, as shown in operation 1008.

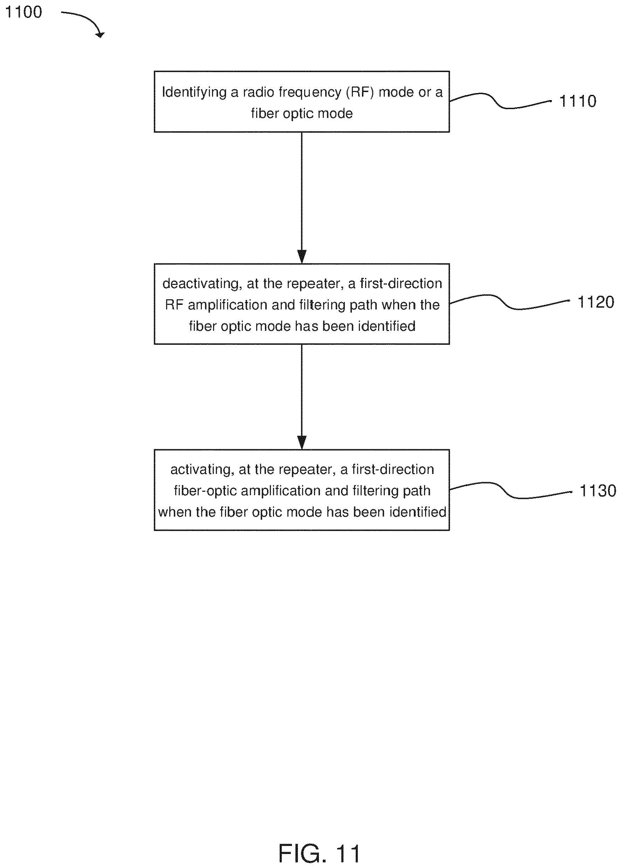

In accordance with one embodiment, a non-transitory machine readable storage medium having instructions embodied thereon is disclosed, as illustrated in the example of FIG. 11. The instructions, when executed by a processor, can comprise identifying a radio frequency (RF) mode or a fiber optic mode, as shown in 1110. The instructions can further comprise switching a repeater between: the RF mode, wherein the repeater is configured to send a first-direction RF mode RF signal to a second antenna port or receive a second-direction RF signal at the second antenna port, and a fiber optic mode, wherein the repeater is configured to send a first-direction fiber optic mode RF signal to a fiber-optic RF path or receive a second-direction fiber optic mode RF signal at the fiber-optic RF path, as shown in 1120.

The instructions can further comprise: deactivating, at the repeater, a first-direction RF amplification and filtering path when the fiber optic mode has been identified. The instructions further comprise: activating, at the repeater, a first-direction fiber-optic RF path when the fiber optic mode has been identified.

In another example, the instructions, when executed by a processor, can comprise deactivating, at the repeater, a second-direction RF amplification and filtering path when the fiber optic mode has been identified; and activating, at the repeater, a second-direction fiber-optic RF path when the fiber optic mode has been identified.

In another example, the instructions, when executed, can comprise switching between a radio frequency (RF) mode and a fiber optic mode.

In another example, the instructions, when executed, can comprise deactivating, at the repeater, oscillation detection for a first-direction amplification and filtering path, and activating, at the repeater, oscillation detection for a second-direction amplification and filtering path.

In another example, the instructions, when executed, can comprise deactivating, at the repeater, attenuation for a first-direction amplification and filtering path, and activating, at the repeater, attenuation for a second-direction amplification and filtering path.

In another example, the instructions, when executed, can comprise switching, at the repeater, attenuation for the second-direction amplification and filtering path when a power threshold has been exceeded.

In another example, the instructions, when executed, can comprise calculating, at the repeater, the first-direction gain based on the second-direction received signal strength indicator (RSSI).

In another example, the instructions, when executed, can comprise adjusting, at the repeater, a gain for the first-direction signal based on the second-direction RSSI; and adjusting, at the repeater, a gain for the second-direction signal.

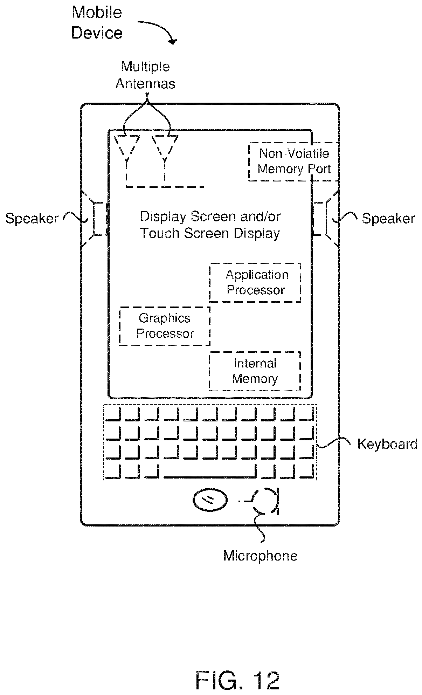

FIG. 12 provides an example illustration of the wireless device, such as a user equipment (UE), a mobile station (MS), a mobile communication device, a tablet, a handset, a wireless transceiver coupled to a processor, or other type of wireless device. The wireless device can include one or more antennas configured to communicate with a node or transmission station, such as an access point (AP), a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The wireless device can communicate using separate antennas for each wireless communication standard or shared antennas for multiple wireless communication standards. The wireless device can communicate in a wireless local area network (WLAN), a wireless personal area network (WPAN), and/or a WWAN.

FIG. 12 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be with the wireless device or wirelessly connected to the wireless device to provide additional user input. A virtual keyboard can also be provided using the touch screen.

Various techniques, or certain aspects or portions thereof, can take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a random-access memory (RAM), erasable programmable read only memory (EPROM), flash drive, optical drive, magnetic hard drive, solid state drive, or other medium for storing electronic data. The low energy fixed location node, wireless device, and location server can also include a transceiver module (i.e., transceiver), a counter module (i.e., counter), a processing module (i.e., processor), and/or a clock module (i.e., clock) or timer module (i.e., timer). One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations.

As used herein, the term processor can include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module can be implemented as a hardware circuit comprising custom very-large-scale integration (VLSI) circuits or gate arrays, off-the-shelf semiconductors such as logic chips, transistors, or other discrete components. A module can also be implemented in programmable hardware devices such as field programmable gate arrays, programmable array logic, programmable logic devices or the like.

In one example, multiple hardware circuits or multiple processors can be used to implement the functional units described in this specification. For example, a first hardware circuit or a first processor can be used to perform processing operations and a second hardware circuit or a second processor (e.g., a transceiver or a baseband processor) can be used to communicate with other entities. The first hardware circuit and the second hardware circuit can be incorporated into a single hardware circuit, or alternatively, the first hardware circuit and the second hardware circuit can be separate hardware circuits.

Modules can also be implemented in software for execution by various types of processors. An identified module of executable code can, for instance, comprise one or more physical or logical blocks of computer instructions, which can, for instance, be organized as an object, procedure, or function. Nevertheless, the executables of an identified module need not be physically located together, but can comprise disparate instructions stored in different locations which, when joined logically together, comprise the module and achieve the stated purpose for the module.

Indeed, a module of executable code can be a single instruction, or many instructions, and can even be distributed over several different code segments, among different programs, and across several memory devices. Similarly, operational data can be identified and illustrated herein within modules, and can be embodied in any suitable form and organized within any suitable type of data structure. The operational data can be collected as a single data set, or can be distributed over different locations including over different storage devices, and can exist, at least partially, merely as electronic signals on a system or network. The modules can be passive or active, including agents operable to perform desired functions.

Reference throughout this specification to "an example" or "exemplary" means that a particular feature, structure, or characteristic described in connection with the example is included in at least one embodiment of the present invention. Thus, appearances of the phrases "in an example" or the word "exemplary" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention can be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics can be combined in any suitable manner in one or more embodiments. In the following description, numerous specific details are provided, such as examples of layouts, distances, network examples, etc., to provide a thorough understanding of embodiments of the invention. One skilled in the relevant art will recognize, however, that the invention can be practiced without one or more of the specific details, or with other methods, components, layouts, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

### ASPECTS OF THE INVENTION

In a broad independent aspect, the invention provides a repeater, comprising:
a first antenna port configured to be coupled to a first antenna;
a second antenna port configured to be coupled to a second antenna;
one or more first direction amplification and filtering paths coupled between the first antenna port and the second antenna port;
one or more second direction amplification and filtering paths coupled between the first antenna port and the second antenna port; and
a controller configured to switch the repeater between:
   a radio frequency (RF) mode, wherein the repeater is configured to send a first-direction RF mode RF signal to the second antenna port or receive a second-direction RF signal at the second antenna port, and
   a fiber optic mode wherein the repeater is configured to send a first-direction fiber optic mode RF signal to a fiber-optic RF path or receive a second-direction fiber optic mode RF signal at the fiber-optic RF path.

In a subsidiary aspect, the repeater is further configured to:
send the first-direction RF mode RF signal to the second antenna port at a first power level or first gain; and
send the first-direction fiber optic mode RF signal to the fiber-optic RF path at a second power level or second gain,
wherein the second power level or second gain in the fiber optic mode is less than the first power level or first gain in the RF mode.

In a further subsidiary aspect in accordance with the preceding aspect,
the second power level is less than the first power level; or
the first power level for an uplink direction does not exceed 1 watt composite conducted power and equivalent isotropic radiated power (EIRP) for each band of operation; or
the first power level for a downlink direction does not exceed 0.05 watt (17 dBm) composite and 10 dBm per channel conducted and EIRP for each band of operation; or
the second gain is less than the first gain by one or more of 50 dB, 45 dB, 40 dB, 35 dB, 30 dB, 25 dB, 20 dB, 15 dB, 10 dB, 5 dB, 3 dB, 1 dB, or a combination thereof; or
the noise figure for the second power level is less than or about the same as the noise figure for the first power level; or
the noise figure for the second gain is less than or about the same as the noise figure for the first gain.

In a subsidiary aspect in accordance with any of the preceding aspects, wherein the fiber-optic RF path further comprises:
one or more first direction bypass paths coupled between the first antenna port and the second antenna port; and
one or more second direction bypass paths coupled between the first antenna port and the second antenna port.

In a subsidiary aspect in accordance with the preceding aspect, wherein the controller is configured to switch the repeater between:
the one or more first direction amplification and filtering paths, and the one or more first direction bypass paths; or
the one or more second direction amplification and filtering paths, and the one or more second direction bypass paths,
or a combination thereof.

In a subsidiary aspect in accordance with any of the preceding aspects, wherein the fiber-optic RF path further comprises:
one or more first direction attenuated gain paths that are configured have an attenuated gain for a first-direction signal compared to the gain of the one or more first-direction amplification and filtering paths; and
one or more second direction attenuated gain paths that are configured to have an attenuated gain for a second direction signal compared to the gain of the one or more second-direction amplification and filtering paths.

In a subsidiary aspect in accordance with any of the preceding aspect, wherein the controller is further configured to switch between:
a multi-directional connector in an RF mode and separate first and second direction connectors in the fiber optic mode; or
a multi-directional port in the RF mode and separate first and second direction ports in the fiber optic mode.

In a subsidiary aspect in accordance with any of the preceding aspects, further comprising:
a diplex signal path configured to be coupled to a combined first and second direction signal path.

In a subsidiary aspect in accordance with any of the preceding aspects, wherein the controller is further configured to receive or send instructions at the repeater.

In a subsidiary aspect in accordance with any of the preceding aspects, wherein the repeater is configured to send a first-direction signal to the fiber optic RF path for conversion from an RF signal to a fiber optic signal, and wherein the repeater is configured to receive a second-direction signal at the fiber optic RF path after conversion from the fiber optic signal to the RF signal.

In a subsidiary aspect in accordance with any of the preceding aspects, wherein the RF signal and the fiber optic signal are analog signals.

In a subsidiary aspect in accordance with any of the preceding aspects, wherein the repeater is configured to operate in accordance with regulations promulgated by a regulatory body when operating in the RF mode and when operating in the fiber optic mode.

In a further broad independent aspect, an embodiment of the invention provides a repeater system, comprising:
a repeater, comprising:
   a first antenna port configured to be coupled to a first antenna;
   a second antenna port configured to be coupled to a second antenna;
   one or more first direction amplification and filtering paths coupled between the first antenna port and the second antenna port;
   one or more second direction amplification and filtering paths coupled between the first antenna port and the second antenna port; and
a remote antenna unit, comprising:
   one or more first direction amplification and filtering paths;
   one or more second direction amplification and filtering paths;
   a first direction fiber optic to radio frequency (RF) converter; and
   a second direction RF to fiber optic converter; and
a controller configured to switch the repeater between an RF mode or a fiber optic mode.

In a subsidiary aspect in accordance with the preceding aspect, wherein the repeater is configured to:
send, in the RF mode, a first-direction RF mode RF signal to the second antenna port; or
receive, in the RF mode, a second-direction RF signal at the second antenna port; or
send, in the fiber optic mode, a first-direction fiber optic mode RF signal to a fiber-optic RF path; or
receive, in the fiber optic mode, a second-direction fiber optic mode RF signal at the fiber-optic RF path.

In a subsidiary aspect in accordance with any one of the preceding aspects, wherein the repeater further comprises:
one or more first direction bypass paths coupled between the first antenna port and the second antenna port; and
one or more second direction bypass paths coupled between the first antenna port and the second antenna port.

In a subsidiary aspect in accordance with any one of the preceding aspects, wherein the repeater is further configured to:
filter and amplify a first-direction signal on the first direction filtering and amplification path using a low noise amplifier (LNA) before the first-direction signal is converted from an RF signal to a fiber optic signal; and
filter and amplify a second-direction signal on the second direction filtering and amplification path using a power amplifier (PA) after the second-direction signal is converted from a fiber optic signal to an RF signal.

In a subsidiary aspect in accordance with any one of the preceding aspects, the remote antenna unit is further configured to:
filter and amplify a first-direction signal on the first direction filtering and amplification path using a power amplifier (PA) after the first-direction signal is converted from a fiber optic signal to an RF signal; and
filter and amplify a second-direction signal on the second direction filtering and amplification path using a low noise amplifier (LNA) before the second-direction signal is converted from an RF signal to a fiber optic signal.

In a subsidiary aspect in accordance with any one of the preceding aspects, the remote antenna unit further comprises:
a transceiver operable to communicate between the antenna unit and the repeater; or
a fiber optic cable operable to communicate between the antenna unit and the repeater.

In a subsidiary aspect in accordance with any one of the preceding aspects, the repeater system further comprises a conversion unit including:
a first direction RF to fiber optic converter; and
a second direction fiber optic to RF converter.

In a further subsidiary aspect in accordance with any one of the preceding aspects, the conversion unit is housed with the repeater.

In a further subsidiary aspect in accordance with any one of the preceding aspects wherein:
the first-direction signal is transmitted from the repeater to the antenna unit as an analog signal; and
the second-direction signal is transmitted from the antenna unit to the repeater as an analog signal.

In a further broad independent aspect, embodiments of the invention provide a machine readable storage medium having instructions embodied thereon, the instructions, when executed by a processor, comprise:
identifying a radio frequency (RF) mode or a fiber optic mode; and switching a repeater between:
   the RF mode, wherein the repeater is configured to send a first-direction RF mode RF signal to a second antenna port or receive a second-direction RF signal at the second antenna port, and
   a fiber optic mode, wherein the repeater is configured to send a first-direction fiber optic mode RF signal to a fiber-optic RF
path or receive a second-direction fiber optic mode RF signal at the fiber-optic RF path.

In a subsidiary aspect in accordance with the preceding aspect, the machine readable storage medium further comprises instructions that when executed:
deactivating, at the repeater, a first-direction RF amplification and filtering path when the fiber optic mode has been identified; and
activating, at the repeater, a first-direction fiber-optic RF path when the fiber optic mode has been identified.

In a subsidiary aspect in accordance with any of the preceding aspects, the first-direction fiber-optic RF path is a first-direction bypass amplification and filtering path or a first-direction attenuated path having a reduced gain compared to a gain for the first-direction RF amplification and filtering path.

In a subsidiary aspect in accordance with any one of the preceding aspects, the storage medium further comprises instructions that when executed:
deactivating, at the repeater, a second-direction RF amplification and filtering path when the fiber optic mode has been identified; and
activating, at the repeater, a second-direction fiber-optic RF path when the fiber optic mode has been identified.

In a subsidiary aspect in accordance with any one of the preceding aspects, the second-direction fiber optic RF path is a second-direction bypass amplification and filtering path or a second-direction attenuated path having a reduced gain compared to a gain for the second-direction RF amplification and filtering path.

In a further subsidiary aspect in accordance with any one of the preceding aspects, the storage medium further comprises instructions that when executed:
deactivating, at the repeater, oscillation detection for a first-direction amplification and filtering path; and
activating, at the repeater, oscillation detection for a second-direction amplification and filtering path.

In a further subsidiary aspect in accordance with any one of the preceding aspects, the machine readable storage medium further comprises instructions that when executed:
deactivating, at the repeater, attenuation for a first-direction amplification and filtering path; and
activating, at the repeater, attenuation for a second-direction amplification and filtering path.

In a further subsidiary aspect in accordance with any one of the preceding aspects, the machine readable storage medium further comprises instructions that when executed:
switching, at the repeater, attenuation for the second-direction amplification and filtering path when a power threshold has been exceeded.

In a further subsidiary aspect in accordance with any one of the preceding aspects, the machine readable storage medium further comprises instructions that when executed:
calculating, at the repeater, the first-direction gain based on the second-direction received signal strength indicator (RSSI).

In a further subsidiary aspect in accordance with any one of the preceding aspects, the machine readable storage medium further comprises instructions that when executed:
adjusting, at the repeater, a gain for the first-direction signal based on the second-direction RSSI; and
adjusting, at the repeater, a gain for the second-direction signal.

In a further broad independent aspect, embodiments of the invention provide a remote antenna unit, comprising:
one or more first direction amplification and filtering paths operable to receive, from a repeater, a low-noise amplified and filtered first-direction signal for amplification, at the remote antenna unit, by a power amplifier (PA);
a first-direction fiber optic to radio frequency (RF) converter operable to receive the low-noise amplified and filtered first-direction signal from the repeater;
one or more second-direction amplification and filtering paths operable to send, from the remote antenna unit, a low-noise amplified and filtered second-direction signal for amplification, at the repeater, by a PA;
a second direction RF to fiber optic converter operable to send the low-noise amplified and filtered second-direction signal to the repeater; and
a communication port configured to receive a fiber optic mode activation signal.

In a subsidiary aspect in accordance with the preceding aspect, the remote antenna unit further comprises:
a machine readable storage medium having instructions embodied thereon, the instructions, when executed by a processor:
activating, at the repeater, oscillation detection for a first-direction amplification and filtering path; or
activating, at the antenna unit, attenuation for a first-direction amplification and filtering path; or
adjusting, at the antenna unit, a gain for the second-direction signal.

In a further broad independent aspect, embodiments of the invention provide a repeater conversion unit, comprising:
a first direction radio frequency (RF) to fiber optic converter operable to:
   receive a low-noise amplified and filtered first-direction RF signal from a repeater,
   convert the low-noise amplified and filtered first-direction RF signal to a low-noise amplified and filtered first-direction fiber optic signal, and
   send the low-noise amplified and filtered first-direction fiber optic signal to a remote antenna unit; and
a second direction fiber optic to RF converter operable to:
   receive a low-noise amplified and filtered second-direction fiber optic signal from the remote antenna unit,
   convert the low-noise amplified and filtered first-direction fiber optic signal to a low-noise amplified and filtered first-direction RF signal, and
   send the low-noise amplified and filtered first-direction RF signal to the repeater.

In a subsidiary aspect in accordance with the preceding aspect, the repeater conversion unit is configured to communicate with the repeater using one or more of a transceiver or fiber optic cable operable to communicate between the repeater conversion unit and the repeater.

In a subsidiary aspect in accordance with any one of the preceding aspects, the repeater conversion unit is housed with the repeater.

## Claims

1. A repeater, comprising:
a first antenna port configured to be coupled to a first antenna;
a second antenna port configured to be coupled to a second antenna;
one or more first direction amplification and filtering paths coupled between the first antenna port and the second antenna port;
one or more second direction amplification and filtering paths coupled between the first antenna port and the second antenna port; and
a controller configured to switch the repeater between:
a radio frequency (RF) mode, wherein the repeater is configured to send a first-direction RF mode RF signal to the second antenna port or receive a second-direction RF signal at the second antenna port, and
a fiber optic mode wherein the repeater is configured to send a first-direction fiber optic mode RF signal to a fiber-optic RF path or receive a second-direction fiber optic mode RF signal at the fiber-optic RF path.

2. The repeater of claim 1, wherein the repeater is further configured to:
send the first-direction RF mode RF signal to the second antenna port at a first power level or first gain; and
send the first-direction fiber optic mode RF signal to the fiber-optic RF path at a second power level or second gain,
wherein the second power level or second gain in the fiber optic mode is less than the first power level or first gain in the RF mode.

3. The repeater of claim 2, wherein:
the second power level is less than the first power level; or
the first power level for an uplink direction does not exceed 1 watt composite conducted power and equivalent isotropic radiated power (EIRP) for each band of operation; or
the first power level for a downlink direction does not exceed 0.05 watt (17 dBm) composite and 10 dBm per channel conducted and EIRP for each band of operation; or
the second gain is less than the first gain by one or more of 50 dB, 45 dB, 40 dB, 35 dB, 30 dB, 25 dB, 20 dB, 15 dB, 10 dB, 5 dB, 3 dB, 1 dB, or a combination thereof; or
the noise figure for the second power level is less than or about the same as the noise figure for the first power level; or
the noise figure for the second gain is less than or about the same as the noise figure for the first gain.

4. The repeater of any one of the preceding claims, wherein the fiber-optic RF path further comprises:
one or more first direction bypass paths coupled between the first antenna port and the second antenna port; and
one or more second direction bypass paths coupled between the first antenna port and the second antenna port.

5. The repeater of claim 4, wherein the controller is configured to switch the repeater between:
the one or more first direction amplification and filtering paths, and the one or more first direction bypass paths; or
the one or more second direction amplification and filtering paths, and the one or more second direction bypass paths,
or a combination thereof.

6. The repeater of any one of the preceding claims, wherein the fiber-optic RF path further comprises:
one or more first direction attenuated gain paths that are configured to have an attenuated gain for a first-direction signal compared to the gain of the one or more first-direction amplification and filtering paths; and
one or more second direction attenuated gain paths that are configured to have an attenuated gain for a second direction signal compared to the gain of the one or more second-direction amplification and filtering paths.

7. The repeater of any one of the preceding claims, wherein the controller is further configured to switch between:
a multi-directional connector in an RF mode and separate first and second direction connectors in the fiber optic mode; or
a multi-directional port in the RF mode and separate first and second direction ports in the fiber optic mode.

8. The repeater of any one of the preceding claims, wherein the controller is further configured to receive or send instructions at the repeater; and optionally said repeater further comprising:
a diplex signal path configured to be coupled to a combined first and second direction signal path.

9. The repeater of claim 8, wherein the repeater is configured to send a first-direction signal to the fiber optic RF path for conversion from an RF signal to a fiber optic signal, and wherein the repeater is configured to receive a second-direction signal at the fiber optic RF path after conversion from the fiber optic signal to the RF signal; and wherein optionally the RF signal and the fiber optic signal are analog signals.

10. The repeater of any one of the preceding claims, wherein the repeater is configured to operate in accordance with regulations promulgated by a regulatory body when operating in the RF mode and when operating in the fiber optic mode.

11. A repeater system, comprising:
a repeater, comprising:
a first antenna port configured to be coupled to a first antenna;
a second antenna port configured to be coupled to a second antenna;
one or more first direction amplification and filtering paths coupled between the first antenna port and the second antenna port;
one or more second direction amplification and filtering paths coupled between the first antenna port and the second antenna port; and
a remote antenna unit, comprising:
one or more first direction amplification and filtering paths;
one or more second direction amplification and filtering paths;
a first direction fiber optic to radio frequency (RF) converter; and
a second direction RF to fiber optic converter; and
a controller configured to switch the repeater between an RF mode or a fiber optic mode.

12. The repeater of claim 11, wherein the repeater is configured to:
send, in the RF mode, a first-direction RF mode RF signal to the second antenna port; or
receive, in the RF mode, a second-direction RF signal at the second antenna port; or
send, in the fiber optic mode, a first-direction fiber optic mode RF signal to a fiber-optic RF path; or
receive, in the fiber optic mode, a second-direction fiber optic mode RF signal at the fiber-optic RF path.

13. The repeater system of either claim 11 or claim 12, wherein the repeater further comprises:
one or more first direction bypass paths coupled between the first antenna port and the second antenna port; and
one or more second direction bypass paths coupled between the first antenna port and the second antenna port;
wherein the repeater is optionally further configured to:
filter and amplify a first-direction signal on the first direction filtering and amplification path using a low noise amplifier (LNA) before the first-direction signal is converted from an RF signal to a fiber optic signal; and
filter and amplify a second-direction signal on the second direction filtering and amplification path using a power amplifier (PA) after the second-direction signal is converted from a fiber optic signal to an RF signal.

14. The repeater system of any one of claims 11 to 13, wherein the remote antenna unit is further configured to:
filter and amplify a first-direction signal on the first direction filtering and amplification path using a power amplifier (PA) after the first-direction signal is converted from a fiber optic signal to an RF signal; and
filter and amplify a second-direction signal on the second direction filtering and amplification path using a low noise amplifier (LNA) before the second-direction signal is converted from an RF signal to a fiber optic signal;
and/or said remote antenna unit further comprises:
a transceiver operable to communicate between the antenna unit and the repeater; or
a fiber optic cable operable to communicate between the antenna unit and the repeater.

15. The repeater system of any one of claims 11 to 14, wherein:
the first-direction signal is transmitted from the repeater to the antenna unit as an analog signal; and
the second-direction signal is transmitted from the antenna unit to the repeater as an analog signal;
said repeater system further optionally comprising a conversion unit including:
a first direction RF to fiber optic converter; and
a second direction fiber optic to RF converter; and
wherein optionally the conversion unit is housed with the repeater.
